(19) **Europäisches Patentamt / European Patent Office / Office européen des brevets**

(11) **EP 4 222 035 B1**

(12) # EUROPEAN PATENT SPECIFICATION

(45) Date of publication and mention
of the grant of the patent:
**17.09.2025 Bulletin 2025/38**

(21) Application number: **21876345.6**

(22) Date of filing: **29.09.2021**

(51) International Patent Classification (IPC):
**B60W 60/00** (2020.01)   **B60W 30/18** (2012.01)
**B60W 40/072** (2012.01)   **B60W 50/00** (2006.01)
**B60W 30/09** (2012.01)   **B60W 30/095** (2012.01)

(52) Cooperative Patent Classification (CPC):
**B60W 60/00274; B60W 30/09; B60W 30/0956;
B60W 30/18154; B60W 30/18159;** B60W 60/0027;
B60W 60/00272; B60W 2552/53; B60W 2554/402;
B60W 2554/4043

(86) International application number:
**PCT/US2021/052537**

(87) International publication number:
**WO 2022/072412 (07.04.2022 Gazette 2022/14)**

(54) **METHODS AND SYSTEMS FOR PERFORMING OUTLET INFERENCE BY AN AUTONOMOUS VEHICLE TO DETERMINE FEASIBLE PATHS THROUGH AN INTERSECTION**

VERFAHREN UND SYSTEME ZUR DURCHFÜHRUNG VON AUSLASSINFERENZ DURCH EIN AUTONOMES FAHRZEUG ZUR BESTIMMUNG MÖGLICHER PFADE DURCH EINE KREUZUNG

PROCÉDÉS ET SYSTÈMES POUR EFFECTUER UNE INFÉRENCE DE SORTIE PAR UN VÉHICULE AUTONOME POUR DÉTERMINER DES TRAJETS RÉALISABLES À TRAVERS UNE INTERSECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2020 US 202017060817
22.03.2021 US 202117207889**

(43) Date of publication of application:
**09.08.2023 Bulletin 2023/32**

(73) Proprietor: **Volkswagen Group of America Investments, LLC
Reston, VA 20190 (US)**

(72) Inventors:
• **HARTNETT, Andrew T.
Pittsburgh, Pennsylvania 15222 (US)**

• **CARR, G. Peter K.
Pittsburgh, Pennsylvania 152 (US)**
• **FOIL, Greydon
Pittsburgh, Pennsylvania 152 (US)**
• **SAVTCHENKO, Constantin
Pittsburgh, Pennsylvania 152 (US)**

(74) Representative: **Hofstetter, Schurack & Partner
Patent- und Rechtsanwaltskanzlei
PartG mbB
Balanstraße 73 / Haus 31A
81541 München (DE)**

(56) References cited:
JP-A- 2002 236 994   KR-A- 20180 040 014
US-A1- 2011 213 513   US-A1- 2016 161 271
US-A1- 2018 099 663   US-A1- 2018 099 663
US-A1- 2018 257 647   US-A1- 2019 310 644
US-A1- 2020 086 855   US-B1- 9 248 834

**Description**

BACKGROUND

Many autonomous vehicle programs rely heavily on mapped lane segments. These may include, for example, programs that are used for performing tracking, prediction and/or planning by an autonomous vehicle. However, mapped lane segments may not always provide an accurate representation of actual vehicle paths through intersections. As an example, a vehicle that takes a left turn at a relatively high speed may follow a shallower trajectory than represented by a mapped lane through the intersection. As such, within intersections, potential trajectories become more diverse, and it becomes more difficult for an autonomous vehicle to accurately predict which trajectory a vehicle will follow.

Furthermore, in certain situations, movers, such as vehicles, pedestrians, bicyclists or other actors, may perform a maneuver that is unrecognized or not expected by an autonomous vehicle. In these situations, it is common for the autonomous vehicle to apply a policy where the actor is predicted to simply continue moving forward and straight along its current path. These predictions can be inaccurate, however. US 2018/099663 A1 discloses a host vehicle that includes a processor configured to: predict a target path of a target vehicle based on lane boundaries of a virtual map; compare the target path to a predicted host path of the host vehicle; apply brakes based on the comparison; predict the target path and the host path as shapes, each having a two-dimensional surface area; determine whether the shapes intersect, and based on the determination, calculate a first timespan where the target vehicle reaches the intersection, and a second timespan where the host vehicle reaches the intersection. US 2016/161271 A1 discloses an automated driving system that includes a perception system disposed on an autonomous vehicle. The automated driving system can detect, using the perception system, a neighboring vehicle proximate to an intersection, identify two or more potential paths through the intersection for the neighboring vehicle, determine a path priority for each of the two or more potential paths, and determine a path priority for a planned path through the intersection for the autonomous vehicle. If the path priority of at least one of the potential paths is higher than the path priority of the planned path, the automated driving system can send a command to one or more vehicle systems configured to allow the neighboring vehicle to proceed through the intersection before the autonomous vehicle.

This invention describes methods and systems that are directed to addressing the problems described above, and/or other issues.

SUMMARY

The present invention is defined by the independent claims. Advantageous embodiments are described in the dependent claims, the following description and the drawings. In certain scenarios, a system includes one or more electronic devices of an autonomous vehicle, and a computer-readable storage medium comprising one or more programming instructions that, when executed, cause one or more of the electronic devices to perform one or more actions. The system identifies an intersection, identifies an object in proximity to the intersection, identifies a plurality of outlets of the intersection, and, for each outlet, identifies a polyline associated with the outlet, identifies a target point along the polyline, and determines a constant curvature path from the object to the target point. The system determines a score associated with each outlet based at least in part on the constant curvature path of the outlet, generates a pruned set of outlets that includes one or more of the outlets from the plurality of outlets based on its score, and for each outlet in the pruned set, generates a reference path from the object to the target point of the outlet.

In some implementations, the system may use one or more of the generated reference paths to predict a trajectory of the object through the intersection, and adjust one or more driving operations of the autonomous vehicle based on the trajectory of the object through the intersection that is predicted.

The system may identify a target point along the polyline by identifying a target point located a certain distance from an end of the outlet.

The system determines a constant curvature path from the object to the target point by fitting a circle to the object and the target point in an object frame. The system performs this fitting by locating a center of rotation of the object at an origin position, applying a point constraint and a slope constraint on the circle such that the circle passes through the origin position, and applying a second point constraint on the circle such that the circle passes through the target point.

In some implementations, the system may determine a score associated with each outlet by determining a heading discrepancy value, determining a curvature parameter, determining a lateral acceleration of the object, and summing the heading discrepancy value, the curvature parameter, and the lateral acceleration. Determining a heading discrepancy value may involve determining a cosine distance at the target point of the outlet. The system may determine a curvature parameter by applying a function to a curvature of the constant curvature path. The result of the function may be a first value if the curvature of the constant curvature path is too tight to traverse the outlet. The result may be a second value if the curvature of the constant curvature path is not too tight to traverse the outlet. The system may determine a lateral acceleration of the object by identifying a curvature of the constant curvature path of the outlet, determining a velocity of the object, squaring the velocity of the object to generate a squared value, and determining a product of the curvature and the squared value.

In some implementations, the system may generate a pruned set of outlets by identifying one or more outlets from the plurality of outlets whose score is less than a threshold value.

The system may generate a reference path from the moving object to the target point of the outlet by generating a spline between the object and the target point in a map frame. One or more of the reference paths may not aligned with mapped lane segments of a map frame.

The system may, for one or more of the generated reference paths, determine one or more mapped lane segments that lead to the outlet associated with the reference path, and determine whether one or more of the mapped lane segments match the reference path. In response to determining that only one of the mapped lane segments match the reference path, the system may apply at least a portion of metadata associated with the one mapped lane segment to the reference path. In response to determining that multiple mapped lane segments match the reference path and that the multiple mapped lane segments have the same metadata, the system may apply at least a portion of metadata associated with one of the multiple mapped lane segments to the reference path. In response to determining that there are no mapped lane segments that match the reference path, the system may apply default metadata to the reference path. The default metadata may include one or more instructions instructing the autonomous vehicle to yield to one or more actors in the intersection.

In some implementations, the system may generate a reference path from the object to the target point of the outlet by generating a reference path that is different from one or more mapped lane segments through the intersection.

In certain other scenarios, a system includes one or more electronic devices of an autonomous vehicle and a computer-readable storage medium having one or more programming instructions. The system identifies an actor in an environment of the autonomous vehicle that is exhibiting unrecognized behavior or that has exhibited unrecognized behavior within a certain time period, and generates a circle associated with the actor, wherein the circle has a radius that is a function of a velocity of the actor. The system identifies one or more target points associated with the actor, where each target point represents a point along a possible route of the actor, and each target point is located along a circumference of the circle. The system assigns a score to each target point, selects the target point associated with the lowest score, and generates a reference path from the actor to the selected target point.

The system may use the reference path to predict a predicted path of the actor, and adjust one or more driving operations of the autonomous vehicle based on the predicted path of the actor that is predicted The system may identify an actor in an environment of the autonomous vehicle that is exhibiting unrecognized behavior or that has exhibited unrecognized behavior within a certain time period by comparing a behavior of the actor to one or more policies of recognized behavior for the autonomous vehicle, and identifying the behavior as an unrecognized behavior if the behavior does not correspond to the one or more polices.

The system may generate a circle associated with the actor by generating the circle having the radius, where the radius represents a distance at which it is predicted that the actor will merge back into the flow of traffic.

The system may identify one or target points associated with the actor by identifying one or more lanes located in front of the actor relative to its heading, where each lane includes a centerline, and for each identified lane, determining an intersection of the circle with the centerline of the lane.

The system may assign a score to each target point by determining a heading discrepancy value, determining a curvature parameter, determining a lateral acceleration of the actor, and summing the heading discrepancy value, the curvature parameter, and the lateral acceleration.

The system may determine a heading discrepancy value by determining a cosine distance at the target point.

The system may determine a curvature parameter by applying a function to a curvature associated with traversing a path between the actor and the target point. The result of the function may be a first value if the curvature of the path is too tight to traverse. The result may be a second value if the curvature of the path is not too tight to traverse.

The system may determine a lateral acceleration of the actor by identifying a curvature of a path between the actor and the target point, determining a velocity of the actor, squaring the velocity of the actor to generate a squared value, and determining a product of the curvature and the squared value.

The system may generate a reference path from the actor to the selected target point by generating a spline between the actor and the target point.

Optionally, the method may comprise: generating a pruned set of outlets that includes one or more of the outlets from the plurality of outlets based on its score comprises identifying one or more outlets from the plurality of outlets whose score is less than a threshold value.

Optionally, the method may comprise: generating a reference path from the moving object to the target point of the outlet comprises generating a spline between the object and the target point in a map frame.

One or more of the reference paths are optionally not aligned with mapped lane segments of a map frame.

Optionally, the method may comprise: For one or more of the generated reference paths:

determining one or more mapped lane segments that lead to the outlet associated with the reference path; and determining whether one or more of the mapped lane segments match the reference path.

Optionally, the method may comprise:
in response to determining that only one of the mapped lane segments match the reference path, applying at least a portion of metadata associated with the one mapped lane segment to the reference path.

Optionally, the method may comprise:
in response to determining that multiple mapped lane segments match the reference path and that the multiple mapped lane segments have the same metadata, applying at least a portion of metadata associated with one of the multiple mapped lane segments to the reference path.

Optionally, the method may comprise:
in response to determining that there are no mapped lane segments that match the reference path, applying default metadata to the reference path, wherein the default metadata includes one or more instructions instructing the autonomous vehicle to yield to one or more actors in the intersection.

Optionally, the method may comprise: generating a reference path from the object to the target point of the outlet comprises generating a reference path that is different from one or more mapped lane segments through the intersection.

Regarding the system, the computer-readable storage medium optionally further comprises one or more programming instructions that, when executed, cause one or more of the electronic devices to:

use one or more of the generated reference paths to predict a trajectory of the object through the intersection; and adjust one or more driving operations of the autonomous vehicle based on the trajectory of the object through the intersection that is predicted.

Regarding the system, the one or more programming instructions that, when executed, optionally cause one or more of the electronic devices to identify a target point along the polyline comprise one or more programming instructions that, when executed, cause the one or more of the electronic devices to identify a target point located a certain distance from an end of the outlet.

Regarding the system, the one or more programming instructions that, when executed, optionally cause one or more of the electronic devices to determine a constant curvature path from the object to the target point comprise one or more programming instructions that, when executed, cause the one or more of the electronic devices to fit a circle to the object and the target point in an object frame by:

locating a center of rotation of the object at an origin position;
applying a point constraint and a slope constraint on the circle such that the circle passes through the origin position; and

applying a second point constraint on the circle such that the circle passes through the target point.

BRIEF DESCRIPTION OF THE DRAWINGS

FIG. 1 is a block diagram illustrating an example autonomous vehicle system.
FIG. 2 illustrates an example vehicle controller system.
FIG. 3 illustrates a flow chart of an example process of performing outlet inference by an autonomous vehicle.
FIG. 4A illustrates a visual depiction of an example constant curvature path.
FIG. 4B illustrates an explanation example relationships pertaining to FIG. 4A.
FIG. 5 illustrates example constant curvature paths.
FIG. 6 illustrates an example of a heading disagreement at a target point.
FIG. 7 illustrates a flow chart of an example process for implementing a scoring function.
FIG. 8 illustrates a flow chart of an example method of assigning metadata to a generated reference path.
FIG. 9 illustrates a flow chart of an example method of predicting future behavior of an actor that is exhibiting or has exhibited unrecognized behavior.
FIG. 10 illustrates an example diagram showing an example reference path between an actor and a target point.
FIG. 11 is a block diagram that illustrates various elements of a possible electronic system, subsystem, controller and/or other component of an AV, and/or external electronic device.

DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

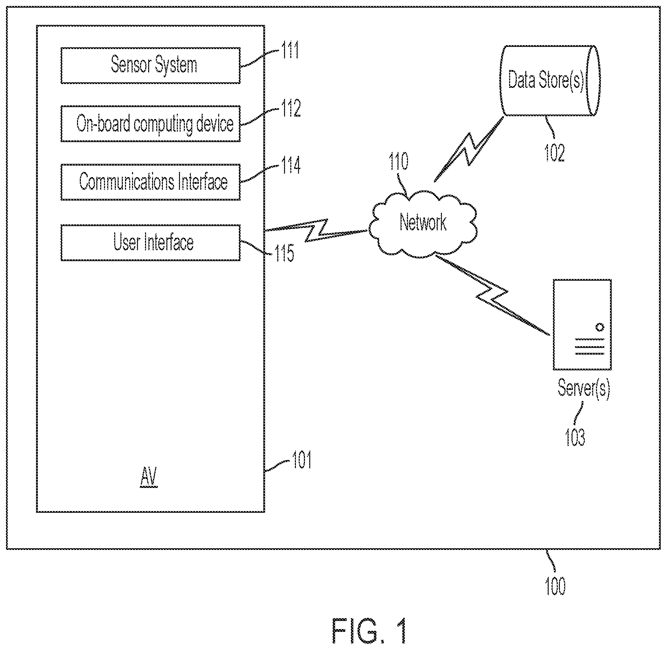

FIG. 1 is a block diagram illustrating an example system **100** that includes an autonomous vehicle **101** in communication with one or more data stores **102** and/or one or more servers **103** via a network **110**. Although there is one autonomous vehicle shown, multiple autonomous vehicles may be coupled to each other and/or coupled to data stores **102** and/or servers **103** over network **110**. Network **110** may be any type of network such as a local area network (LAN), a wide area network (WAN) such as the Internet, a cellular network, a satellite network, or a combination thereof, and may be wired or wireless. Data store(s) **102** may be any kind of data stores such as, without limitation, map data store(s), traffic information data store(s), user information data store(s), point of interest data store(s), or any other type of content data store(s). Server(s) **103** may be any kind of servers or a cluster of servers, such as, without limitation, Web or cloud servers, application servers, backend servers, or a combination thereof.

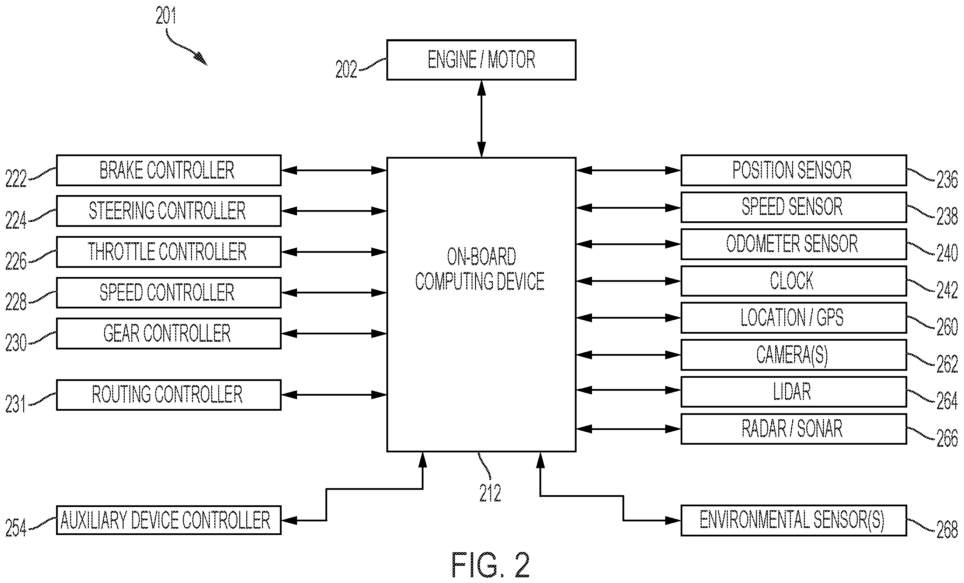

As illustrated in FIG. 1, the autonomous vehicle **101** may include a sensor system **111,** an on-board computing device **112,** a communications interface **114,** and a user interface **115**. Autonomous vehicle **101** may further include certain components (as illustrated, for example, in FIG. 2) included in vehicles, such as, an engine, wheels, steering wheel, transmission, etc., which may be controlled by the on-board computing device **112** using a variety of communication signals and/or commands, such as, for example, acceleration signals or commands, deceleration signals or commands, steering signals or commands, braking signals or commands, etc.

The sensor system **111** may include one or more sensors that are coupled to and/or are included within the autonomous vehicle **101**. Examples of such sensors include, without limitation, a radio detection and ranging (RADAR) system, a laser detection and ranging (LiDAR) system, a sound navigation and ranging (SONAR) system, one or more cameras (e.g., visible spectrum cameras, infrared cameras, etc.), temperature sensors, position sensors (e.g., global positioning system (GPS), etc.), location sensors, fuel sensors, motion sensors (e.g., inertial measurement units (IMU), etc.), humidity sensors, occupancy sensors, or the like. The sensor data can include information that describes the location of objects within the surrounding environment of the autonomous vehicle **101,** information about the environment itself, information about the motion of the autonomous vehicle **101,** information about a route of the autonomous vehicle, or the like. As autonomous vehicle **101** travels over a surface, at least some of the sensors may collect data pertaining to the surface.

The LiDAR system may include a sensor configured to sense or detect objects in an environment in which the autonomous vehicle **101** is located. Generally, LiDAR system is a device that incorporates optical remote sensing technology that can measure distance to a target and/or other properties of a target (e.g., a ground surface) by illuminating the target with light. As an example, the LiDAR system may include a laser source and/or laser scanner configured to emit laser pulses and a detector configured to receive reflections of the laser pulses. For example, the LiDAR system may include a laser range finder reflected by a rotating mirror, and the laser is scanned around a scene being digitized, in one, two, or more dimensions, gathering distance measurements at specified angle intervals. The LiDAR system, for example, may be configured to emit laser pulses as a beam. Optionally, the beam may be scanned to generate two dimensional or three dimensional range matrices. In an example, the range matrices may be used to determine distance to a given vehicle or surface by measuring time delay between transmission of a pulse and detection of a respective reflected signal. In some examples, more than one LiDAR system may be coupled to the first vehicle to scan a complete 360° horizon of the first vehicle. The LiDAR system may be configured to provide to the computing device a cloud of point data representing the surface(s), which have been hit by the laser. The points may be represented by the LiDAR system in terms of azimuth and elevation angles, in addition to range, which can be converted to (X, Y, Z) point data relative to a local coordinate frame attached to the vehicle. Additionally, the LIDAR may be configured to provide intensity values of the light or laser reflected off the surfaces that may be indicative of a surface type. In examples, the LiDAR system may include components such as light (e.g., laser) source, scanner and optics, photo-detector and receiver electronics, and position and navigation system. In an example, The LiDAR system may be configured to use ultraviolet (UV), visible, or infrared light to image objects and can be used with a wide range of targets, including non-metallic objects. In one example, a narrow laser beam can be used to map physical features of an object with high resolution.

It should be noted that the LiDAR systems for collecting data pertaining to the surface may be included in systems other than the autonomous vehicle **101** such as, without limitation, other vehicles (autonomous or driven), robots, satellites, etc.

FIG. 2 illustrates an example system architecture for a vehicle **201,** such as the autonomous vehicle **101** of FIG. 1 autonomous vehicle. The vehicle **201** may include an engine or motor **202** and various sensors for measuring various parameters of the vehicle and/or its environment. Operational parameter sensors that are common to both types of vehicles include, for example: a position sensor **236** such as an accelerometer, gyroscope and/or inertial measurement unit; a speed sensor **238;** and an odometer sensor **240.** The vehicle **101** also may have a clock **242** that the system architecture uses to determine vehicle time during operation. The clock **242** may be encoded into the vehicle on-board computing device **212,** it may be a separate device, or multiple clocks may be available.

The vehicle **201** also may include various sensors that operate to gather information about the environment in which the vehicle is traveling. These sensors may include, for example: a location sensor **260** such as a GPS device; object detection sensors such as one or more cameras **262**; a LiDAR sensor system **264;** and/or a radar and or and/or a sonar system **266.** The sensors also may include environmental sensors **268** such as a precipitation sensor and/or ambient temperature sensor. The object detection sensors may enable the vehicle **201** to detect moving actors and stationary objects that are within a given distance or range of the vehicle **201** in any direction, while the environmental sensors collect data about environmental conditions within the vehicle's area of travel. The system architecture will also include one or more cameras **262** for capturing images of the environment.

During operations, information is communicated from the sensors to an on-board computing device **212.** The on-board computing device **212** analyzes the data captured by the sensors and optionally controls operations of the vehicle based on results of the analysis. For example, the on-board computing device **212** may control braking via a brake controller **222;** direction via a steering controller **224;** speed and acceleration via a throttle controller **226** (in a gas-powered vehicle) or a motor speed controller **228** (such as a current level controller in an electric vehicle); a differential gear controller **230** (in vehicles with transmissions); and/or other controllers such as an auxiliary device controller **254.**

Geographic location information may be communicated from the location sensor 260 to the on-board computing device **212,** which may then access a map of the environment that corresponds to the location information to determine known fixed features of the environment such as streets, buildings, stop signs and/or stop/go signals. Captured images from the cameras **262** and/or object detection information captured from sensors such as a LiDAR system **264** is communicated from those sensors) to the on-board computing device **212.** The object detection information and/or captured images may be processed by the on-board computing device **212** to detect objects in proximity to the vehicle **201.** In addition or alternatively, the vehicle **201** may transmit any of the data to a remote server system **103** (FIG. 1) for processing. Any known or to be known technique for making an object detection based on sensor data and/or captured images can be used in the embodiments disclosed in this invention.

The on-board computing device **212** may obtain, retrieve, and/or create map data that provides detailed information about the surrounding environment of the autonomous vehicle **201.** The on-board computing device **212** may also determine the location, orientation, pose, etc. of the AV in the environment (localization) based on, for example, three dimensional position data (e.g., data from a GPS), three dimensional orientation data, predicted locations, or the like. For example, the on-board computing device **212** may receive GPS data to determine the AV's latitude, longitude and/or altitude position. Other location sensors or systems such as laser-based localization systems, inertial-aided GPS, or camera-based localization may also be used to identify the location of the vehicle. The location of the vehicle may include an absolute geographical location, such as latitude, longitude, and altitude as well as relative location information, such as location relative to other cars immediately around it which can often be determined with less noise than absolute geographical location. The map data can provide information regarding: the identity and location of different roadways, road segments, lane segments, buildings, or other items; the location, boundaries, and directions of traffic lanes (e.g., the location and direction of a parking lane, a turning lane, a bicycle lane, or other lanes within a particular roadway) and metadata associated with traffic lanes; traffic control data (e.g., the location and instructions of signage, traffic lights, or other traffic control devices); and/or any other map data that provides information that assists the on-board computing device **212** in analyzing the surrounding environment of the autonomous vehicle **201.**

In certain embodiments, the map data may also include reference path information that correspond to common patterns of vehicle travel along one or more lanes such that the motion of the object is constrained to the reference path (e.g., locations within traffic lanes on which an object commonly travels). Such reference paths may be pre-defined such as the centerline of the traffic lanes. Optionally, the reference path may be generated based on a historical observations of vehicles or other objects over a period of time (e.g., reference paths for straight line travel, lane merge, a turn, or the like).

In certain embodiments, the on-board computing device **212** may also include and/or may receive information relating to the trip or route of a user, real-time traffic information on the route, or the like.

The on-board computing device **212** may include and/or may be in communication with a routing controller **231** that generates a navigation route from a start position to a destination position for an autonomous vehicle. The routing controller **231** may access a map data store to identify possible routes and road segments that a vehicle can travel on to get from the start position to the destination position. The routing controller **231** may score the possible routes and identify a preferred route to reach the destination. For example, the routing controller **231** may generate a navigation route that minimizes Euclidean distance traveled or other cost function during the route, and may further access the traffic information and/or estimates that can affect an amount of time it will take to travel on a particular route. Depending on implementation, the routing controller **231** may generate one or more routes using various routing methods, such as Dijkstra's algorithm, Bellman-Ford algorithm, or other algorithms. The routing controller **231** may also use the traffic information to generate a navigation route that reflects expected conditions of the route (e.g., current day of the week or current time of day, etc.), such that a route generated for travel during rush-hour may differ from a route generated for travel late at night. The routing controller **231** may also generate more than one navigation route to a destination and send more than one of these navigation routes to a user for selection by the user from among various possible routes.

In various implementations, an on-board computing device **212** may determine perception information of the surrounding environment of the autonomous vehicle **201**. Based on the sensor data provided by one or more sensors and location information that is obtained, the on-board computing device **212** may determine perception information of the surrounding environment of the autonomous vehicle **201**. The perception information may represent what an ordinary driver would perceive in the surrounding environment of a vehicle. The perception data may include information relating to one or more objects in the environment of the autonomous vehicle **201**. For example, the on-board computing device **212** may process sensor data (e.g., LiDAR or RADAR data, camera images, etc.) in order to identify objects and/or features in the environment of autonomous vehicle **201**. The objects may include traffic signals, road way boundaries, other vehicles, pedestrians, actors, and/or obstacles, etc. The on-board computing device **212** may use any now or hereafter known object recognition algorithms, video tracking algorithms, and computer vision algorithms (e.g., track objects frame-to-frame iteratively over a number of time periods) to determine the perception.

In some embodiments, the on-board computing device **212** may also determine, for one or more identified objects in the environment, the current state of the object. The state information may include, without limitation, for each object: current location; current speed and/or acceleration, current heading; current pose; current shape, size, or footprint; type (e.g., vehicle vs. pedestrian vs. bicycle vs. static object or obstacle); and/or other state information.

The on-board computing device **212** may perform one or more prediction and/or forecasting operations. For example, the on-board computing device **212** may predict future locations, trajectories, and/or actions of one or more objects. For example, the on-board computing device **212** may predict the future locations, trajectories, and/or actions of the objects based at least in part on perception information (e.g., the state data for each object comprising an estimated shape and pose determined as discussed below), location information, sensor data, and/or any other data that describes the past and/or current state of the objects, the autonomous vehicle **201,** the surrounding environment, and/or their relationship(s). For example, if an object is a vehicle and the current driving environment includes an intersection, the on-board computing device **212** may predict whether the object will likely move straight forward or make a turn. If the perception data indicates that the intersection has no traffic light, the on-board computing device **212** may also predict whether the vehicle may have to fully stop prior to enter the intersection.

In various embodiments, the on-board computing device **212** may determine a motion plan for the autonomous vehicle. For example, the on-board computing device **212** may determine a motion plan for the autonomous vehicle based on the perception data and/or the prediction data. Specifically, given predictions about the future locations of proximate objects and other perception data, the on-board computing device **212** can determine a motion plan for the autonomous vehicle **201** that best navigates the autonomous vehicle relative to the objects at their future locations.

In one or more embodiments, the on-board computing device **212** may receive predictions and make a decision regarding how to handle objects in the environment of the autonomous vehicle **201**. For example, for a particular object (e.g., a vehicle with a given speed, direction, turning angle, etc.), the on-board computing device **212** decides whether to overtake, yield, stop, and/or pass based on, for example, traffic conditions, map data, state of the autonomous vehicle, etc. Furthermore, the on-board computing device **212** also plans a path for the autonomous vehicle 201 to travel on a given route, as well as driving parameters (e.g., distance, speed, and/or turning angle). That is, for a given object, the on-board computing device **212** decides what to do with the object and determines how to do it. For example, for a given object, the on-board computing device **212** may decide to pass the object and may determine whether to pass on the left side or right side of the object (including motion parameters such as speed).

When the on-board computing device 212 detects an actor (i.e., an object that is capable of moving), the on-board computing device 212 will generate one or more possible trajectories for the detected actor, and analyze the possible trajectories to assess the risk of a collision between the actor and the AV. If the risk exceeds an acceptable threshold, it may determine whether the collision can be avoided if the autonomous vehicle follows a defined vehicle trajectory and/or implements one or more dynamically generated emergency maneuvers is performed in a pre-defined time period (e.g., *N* milliseconds). If the collision can be avoided, then the on-board computing device **212** may execute one or more control instructions to perform a cautious maneuver (e.g., mildly slow down, accelerate, change lane, or swerve). In contrast, if the collision cannot be avoided, then the on-board computing device **112** may execute one or more control instructions for execution of an emergency maneuver (e.g., brake and/or change direction of travel).

As discussed above, planning and control data regarding the movement of the autonomous vehicle is generated for execution. The on-board computing device **212** may, for example, control braking via a brake controller; direction via a steering controller; speed and acceleration via a throttle controller (in a gas-powered vehicle) or a motor speed controller (such as a current level controller in an electric vehicle); a differential gear controller (in vehicles with transmissions); and/or other controllers.

In the various embodiments discussed in this invention, the description may state that the vehicle or a controller included in the vehicle (e.g., in an on-board computing system) may implement programming instructions that cause the vehicle and/or a controller to make decisions and use the decisions to control operations of the vehicle. However, the embodiments are not limited to this arrangement, as in various embodiments the analysis, decision making and or operational control may be handled in full or in part by other computing devices that are in electronic communication with the vehicle's on-board computing device and/or vehicle control system. Examples of such other computing devices include an electronic device (such as a smartphone) associated with a person who is riding in the vehicle, as well as a remote server that is in electronic communication with the vehicle via a wireless communication network. The processor of any such device may perform the operations that will be discussed below.

Referring back to FIG. 1, the communications interface **114** may be configured to allow communication between autonomous vehicle **101** and external systems, such as, for example, external devices, sensors, other vehicles, servers, data stores, databases etc. Communications interface **114** may utilize any now or hereafter known protocols, protection schemes, encodings, formats, packaging, etc. such as, without limitation, Wi-Fi, an infrared link, Bluetooth, etc. User interface system **115** may be part of peripheral devices implemented within vehicle **101** including, for example, a keyword, a touch screen display device, a microphone, and a speaker, etc.

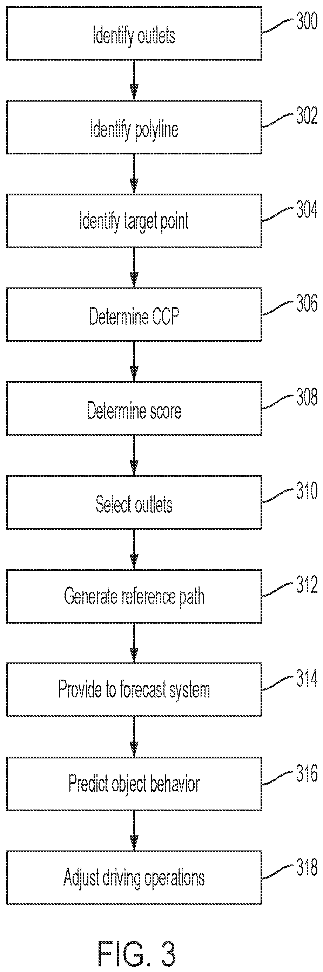

In various implementations, an autonomous vehicle may perform outlet inference to determine a set of feasible outlets for a moving object to take through an intersection, and then may generate one or more paths to those feasible outlets. FIG. 3 illustrates a flow chart of an example process of performing outlet inference by an autonomous vehicle according to an implementation.

As illustrated in FIG. 3, an autonomous vehicle identifies **300** one or more outlets from an intersection. An outlet refers to a trajectory that a moving object (e.g., an actor) may take to traverse an intersection. For example, an outlet may be a left turn, a right turn, a straight trajectory, a U-turn, and/or the like. In various implementations, an autonomous vehicle may identify **300** one or more outlets of an intersection that one or more actors are approaching or are within. The one or more actors may be actors that are present in one or more frames obtained by the autonomous vehicle. An autonomous vehicle may identify **300** one or more outlets by accessing or receiving this information from the on-board computing device of the autonomous vehicle.

For each identified outlet, the autonomous vehicle identifies **302** a representative polyline for the outlet. In various implementations, the polyline may be a centerline of a lane. The autonomous vehicle identifies **304** a target point. The target point may have a locational element (e.g., a location) and a directional element. The target point is a point located a certain distance from an outlet. The target point is located along the polyline. For instance, an autonomous vehicle may identify **304** a target point approximately ten feet from the end of the outlet. As another example, the target point may be appoint located a certain distance from an intersection polygon. Additional and/or alternate target points may be used.

For each identified outlet, the system determines **306** a constant curvature path (CCP) from a center of rotation (COR) of an object to the target point for the outlet. The object may be an object other than the autonomous vehicle that is in proximity to the intersection of interest such as, for example, another vehicle, a motorcycle, a bicycle, and/or the like.

The autonomous vehicle determines **306** a CCP by fitting a circle to the object and the target point given various constraints. The constraints may include a point constraint on the object. The COR of the object may be transformed from a map frame to an object frame where the COR is positioned at the origin.

The constraints may include a slope constraint at the COR of the object requiring the circle to pass through this point. The constraints may include another point constraint on the target point of the outlet of interest. However, there may not be a constraint on the heading or slope of the target point, meaning that the circle must pass through the target point but is not required to match its slope (direction) at that point.

In various implementations, an autonomous vehicle may determine **306** a CCP by transforming the slope and/or point constraints to an object frame. The slope and point constraints may be fitted so that the current heading of the object aligns with the +x axis, the point/slope constraint is positioned at the origin, and the slope constraint is aligned with an axis. With such a fitting, the CCP may be represented as a circle defined by the following equation:

$$y_c^2 = x^2 + (y - y_c)^2$$

where:

   $(0, y_c)$ is the center of the circle,
   $| y_c |$ is the radius of the circle,
   $(x_o, y_o)$ is the coordinate of the outlet target point in the object frame:

$$y_c = \frac{x_o^2 + y_o^2}{2y_o}$$

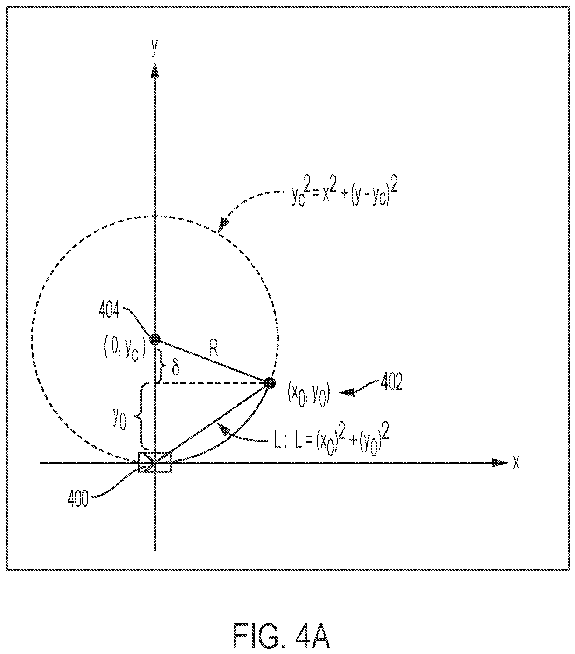

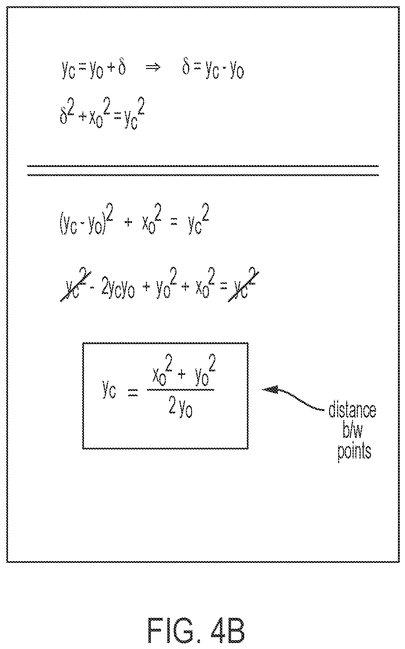

FIG. 4A illustrates a visual depiction of an example CCP according to an implementation. As illustrated by FIG. 4A, the object **400** is positioned at the origin (0, 0). The target point **402** of an outlet is positioned at $(x_0, y_0)$, and the center of the circle **404** is located at $(0, y_c)$. FIG. 4B illustrates an explanation of how the above relationships are determined according to an implementation.

In various implementations, the slope of any point along a circle of a CCP may be determined using the following relationships:

$$\frac{d}{dx}\left(x^2 + (y - y_c)^2\right) = 0$$

$$x + (y - y_c)\frac{dy}{dx} = 0$$

$$\frac{dy}{dx} = \frac{-x}{y - y_c}$$

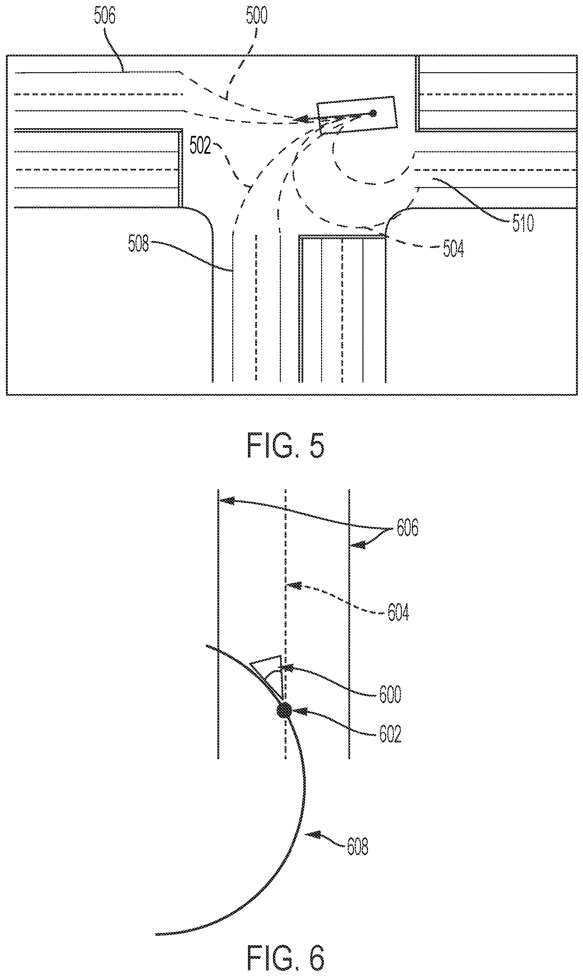

Because of the transformation to the object frame, all outlet's CCPs and their features may be determined in parallel. FIG. 5 illustrates three example CCPs **500, 502, 504,** each fit to an example outlet **506, 508, 510** according to various implementations.

Referring back to FIG. 3, an autonomous vehicle determines **308** a score for one or more of the determined outlets. The score may represent a feasibility of a particular CCP. In various implementations, a heading disagreement at the target point of an outlet and the curvature of the CCP for the outlet may be determined and considered as part of the score determination.

As discussed above, although a circle is constrained to pass through the target point in a given outlet, there may be no slope constraint at the target point. As such, the circle does not need to be aligned with a lane at the target point, and a heading disagreement at an outlet point may exist. This heading disagreement may be used to generate a score for the circle. FIG. 6 illustrates an example of a heading disagreement **600** at a target point **602** relative to a reference polyline **604** of a lane having lane boundaries **606** according to an implementation. FIG. 6 also illustrates an example circle fit **608** for the illustrated heading disagreement.

As explained above, it instead of constraining the slope at the COR of the object, the slope may be constrained at the target point of an outlet. In this situation, a heading disagreement at the COR may exist and may be considered for the score rather than a heading disagreement at the target point.

The curvature of the CCP along with the speed of an object may determine a lateral or centripetal acceleration for the object, which may be considered in determining a score. In addition, a minimum curvature may be imposed to represent a turning radius of a typical vehicle.

A scoring function may consider lane alignment, an achievable curvature, and comfort as defined by acceleration. To account for only achievable curvatures, a high loss function may be associated with any path that requires a turning radius that is less than what is possible for a particular object type. In various implementations, a Heaviside function may be used to identify achievable curvatures. For example, a Heaviside function may return a value of '1' is the curvature of the circle is too tight for the object, otherwise it returns a value of '0'.

Comfort may be based on a normal acceleration for a path, which may be represented as (curvature * (speed) ^ 2).

The following illustrates an example scoring function:

$$loss = A_1\delta\theta + A_2\Theta\left[\kappa - \kappa_{min}\right] + A_3\kappa v^2$$

Where:

$\delta\theta$ is a cosine distance (heading discrepancy);

$\Theta$ is a binary value result of a curvature Heaviside function indicating whether a curvature is feasible;

$\kappa\upsilon^2$ is the lateral acceleration of an object;

$\kappa$ is the curvature of the circle (which equals 1 / radius); and

A1, A2 and A3 are coefficients that may be used to weight various parameters.

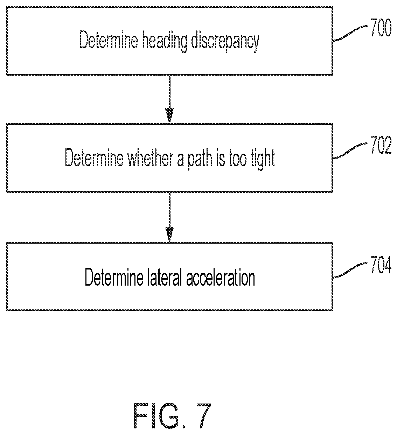

FIG. 7 illustrates a flow chart of an example process for implementing the above scoring function according to an implementation. As illustrated by FIG. 7, an autonomous vehicle may determine 700 a heading discrepancy at the target point. An autonomous vehicle may determine **700** a heading discrepancy by determining a cosine distance at the target point. In various implementations, a coefficient may be applied to the heading discrepancy. The coefficient may be a result of applying a scaling factor to the heading. In certain implementations, that scaling factor may be a rejection threshold value. By way of example, a scaling factor may be represented by R. A first coefficient, A1, may be represented as A1 = 2R. A second coefficient, A2 may be represented as A2 = R. A third coefficient, A3, may be represented as A3 = R / 5. In this example, if R = 10, A1 = 20, A2 = 10, and A3 = 2. It is understood that additional and/or alternate scaling factors, coefficient determinations, and/or coefficient values may be used.

The autonomous vehicle may determine **702** whether the path for an object (e.g., an actor) to navigate to a given outlet is too tight for the object to navigate. This determination may be based on whether the path curvature associated with the circle fit described above is less than a threshold value. If it is, the system may determine that the object may comfortably reach the outlet target. If the path curvature associated with the object is not less than a threshold value, the system may determine that the actor may not reach the outlet target without a multi-point maneuver. In various implementations, a function may be used to assist with this determination. A function may take information pertaining to a particular outlet as input and may output one value if the outlet may be comfortably traversed by an actor and a different value if the outlet may not be comfortably traversed by the object. For instance, a binary function may be used.

The autonomous vehicle may determine **704** a lateral acceleration of the object. The lateral acceleration may be the product of the curvature of the outlet and the velocity squared of the object. In various implementations, the velocity may be obtained from object tracking. The score may be determined by summing the heading discrepancy (with a coefficient applied, if applicable), the curvature parameter (with a coefficient applied, if applicable), and the lateral velocity of the object (with a coefficient applied, if applicable).

Referring back to FIG. 3, the system generates a pruned set of outlets by selecting 310 one or more of the outlets based on their associated scores. For example, the system may select 310 the outlet having the lowest score. As another example, the system may select **310** all outlets having a score that is less than a threshold value. The outlets in the pruned set may represent the most geometrically plausible paths for an object.

Identifying the most plausible outlets before generating reference paths to those outlets improves the operation of the autonomous vehicle by having it only expend computational resources developing reference paths to feasible outlets rather than all outlets for prediction or planning or forecasting.

For each outlet in the pruned set, an autonomous vehicle generate**312** a reference path. The reference path may replace a centerline of a mapped lane segment to use in forecasting. For example, forecasting programs for autonomous vehicles commonly use reference paths defined by mapped lane segments to forecast object behavior (e.g., autonomous vehicles expect objects to follow lanes). However, the autonomous vehicle may generate **312** a reference path to use to replace mapped lane segments. As such, a generated reference path may be different from one or more mapped lane segments through the intersection.

The autonomous vehicle may generate **312** a reference path that is in the map frame (rather than the object frame). In various embodiments, an autonomous vehicle may generate **312** a curve or spline from the COR of an object to the target point of an outlet as the reference path. An example of such curve or spline may be a Bezier curve, a parametric curve that is related to the Bernstein polynomial. Given a set of $n + 1$ control points $P_0$, $P_1$,..., $P_n$, the corresponding Bezier curve is given by:

$$\mathbf{C}(t) = \sum_{i=0}^{n} \mathbf{P}_i \, B_{i,n}(t),$$

where $B_{i,n}(t)$ is a Bernstein polynomial and $t \in [0, 1]$.

However, it is understood that other types of curves or splines may be used.

Referring back to FIG. 3, the autonomous vehicle may apply **314** metadata to one or more of the newly generated reference paths. Mapped lane segments typically have metadata associated with the lanes. By generating a reference path that is not based on mapped lane segments, this metadata may be lost. Examples of metadata that may be tied to mapped lane segments may include, for example, one or more rules for who has the right of way through the intersection under various conditions, traffic rules, speed limits, and/or the like.

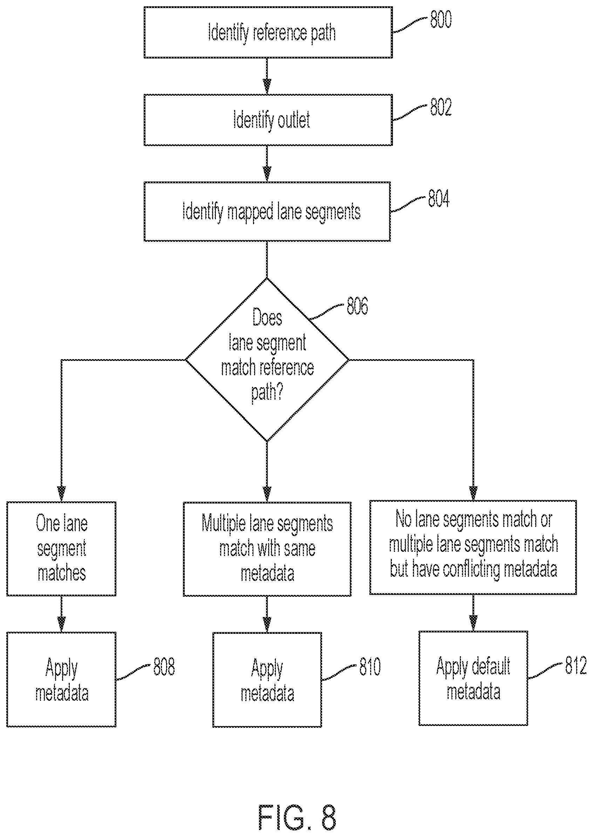

FIG. 8 illustrates a flow chart of an example method of assigning metadata to a generated reference path according to an implementation. As illustrated by FIG. 8, the autonomous vehicle may identify **800** a generated reference path. The autonomous vehicle may identify **802** an outlet associated with the reference path. It may identify **804** one or more mapped lane segments that lead to the identified outlet.

The autonomous vehicle may determine **806** whether one or more of the identified mapped lane segments match the reference path. If only one mapped lane segment matches the reference path, then the autonomous vehicle will adopt the metadata of that mapped lane segment and apply **808** it to the reference path.

If the autonomous vehicle determines that multiple mapped lane segments match the reference path, and each has the same metadata, the autonomous vehicle may adopt the metadata of one of the mapped lane segments and apply **810** it to the reference path.

If the autonomous vehicle determines that there are no mapped lane segments that match the reference path or that there are multiple mapped lane segments that match the reference path but with conflicting metadata, the autonomous vehicle may apply **812** default metadata to the reference path. The default metadata may represent one or more instructions for the autonomous vehicle to yield to everyone else in the intersection in an abundance of caution. Additional and/or alternate rules may be implemented as part of the default metadata.

Referring back to FIG. 3, an autonomous vehicle may provide **314** one or more of the reference paths and associated metadata to an on-board computing device to perform one or more forecasting and prediction operations. At least and portion of the reference path and metadata may be used to predict **316** the behavior of the associated object. This prediction may be performed by applying an object kinematics model to a path following controller. These models and controllers may include, for example, a pure pursuit controller, a simple-bicycle model for non-holonomic control and pure-pursuit, a probabilistic learned policy (such as one instantiated as deep (recurrent) neural networks), and/or the like.

This prediction information may be used by the on-board computing device to adjust **318** one or more driving operations of an autonomous vehicle. For example, the system may cause an autonomous vehicle to accelerate, decelerate, brake, change direction, adjust its trajectory, and/or perform one or more collision avoidance operations based on the predicted behavior of the object through an intersection.

As an example, referring back to FIG. 2, an on-board computing device may receive at least a portion of the prediction data, and may analyze it to execute or more vehicle control instructions. For instance, in response to analyzing the prediction data, an on-board computing device may execute one or more control instructions that cause the autonomous vehicle to decelerate or brake at an intersection in order to yield to the object. For example, an on-board computing device may cause one or more brakes of the autonomous vehicle to be applied. Additional and/or alternate driving operations may be performed.

Autonomous vehicles may encounter many different actors along its journey. These actors may include other vehicles, pedestrians, bicyclists, motorcyclists, and/or the like. In certain situations, these actors may share a roadway with the autonomous vehicle. For example, an actor may be traveling on the same roadway as an autonomous vehicle, and may be positioned in front of, behind, or on either side of the autonomous vehicle. It is important for the autonomous vehicle to be able to accurately predict the behavior of such actors so the autonomous vehicle can plan its own trajectory and so that it can safely react to any changes in behavior of such actors.

An autonomous vehicle may apply one or more algorithms or models to in response to detecting a recognized behavior by an actor. A recognized behavior may be an action performed by an actor that conforms to a policy of the autonomous vehicle delineating such actions. For example, turning on a signal and then moving a single lane to the left or right at a steady velocity may be a recognized behavior that an actor may perform. However, actors may perform unrecognized behaviors. An unrecognized behavior refers to a behavior of an actor that does not correspond to a known policies of the autonomous vehicle. An example of an unrecognized behavior of an actor may be veering into oncoming traffic to overtake another vehicle. Another example of an unrecognized behavior may be an actor who is traveling on a road but whose movement does not follow identified lane boundaries (e.g.., swerving). As another example, an unrecognized behavior may occur when an actor cuts corners on turns such that the actor's movement no longer corresponds to identified lane boundaries. Additional and/or alternate unrecognized behaviors may be used.

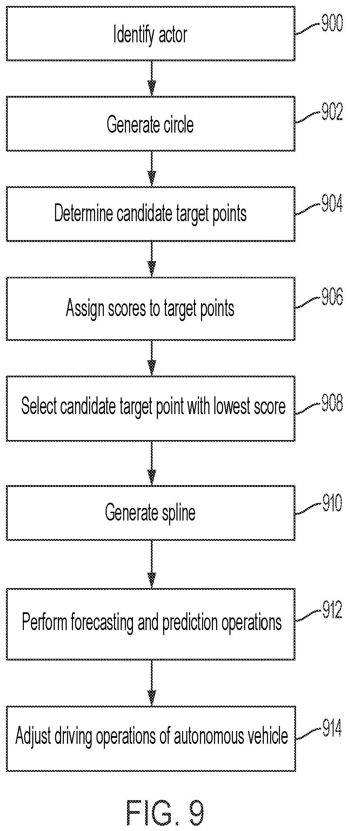

FIG. 9 illustrates a flow chart of an example method of predicting future behavior of an actor that is exhibiting or has exhibited unrecognized behavior. As illustrated by FIG. 1, an autonomous vehicle may identify **900** an actor that is exhibiting or that has exhibited unrecognized behavior. An autonomous vehicle may identify **900** an actor that is currently exhibiting unrecognized behavior. An autonomous vehicle may identify **900** an actor that has exhibited unrecognized behavior within a certain time period (e.g., within the last one minute).

An autonomous vehicle may identify **900** an actor by comparing its behavior to one or more policies that define one or more recognized behaviors. If the actor's behavior does not correspond to any policy, then the autonomous vehicle may identify its behavior as an unrecognized behavior. Knowing that vehicles with unrecognized behavior may be more unpredictable and more difficult to understand, an autonomous vehicle may leave a greater distance between it and these actors or otherwise behave cautiously around them.

For one or more of the identified actors, an autonomous vehicle may generate a prediction of where an actor exhibiting unrecognized behavior is moving by generating **902** a circle corresponding to the actor having a radius designated by R. R may be a function of the actor's velocity. R may be at least as large as some minimum distance. For example, R may be the maximum of 15 m or (5 seconds * velocity (mps)). Additional and/or alternate values may be used. In various embodiments, R may represent the distance at which an autonomous vehicle predicts that the actor exhibiting unrecognized behavior will merge back into the flow of traffic.

The autonomous vehicle may determine **904** one or more candidate target points for the actor. A candidate target point may represent one or more points at which the actor will merge into traffic. A candidate target point may be a point along one or more possible routes of an actor. One or more of these routes may be in proximity to the actor. In various embodiments, a target point may be located along a circumference of the circle, defined by R.

The autonomous vehicle may determine **904** a candidate target point by identifying one or more lanes located in front of the actor relative to its heading. In various embodiments, an autonomous vehicle may identify one or more lanes located in a frontal cone relative to the actor's heading.

An autonomous vehicle may identify one or more lanes by determining a location of the actor based on information obtained from one or more sensors of the autonomous vehicle. The autonomous vehicle may access a map of the environment of the autonomous vehicle and use the location of the actor to identify one or more lanes located in of the actor relative to its heading.

For each of the identified lanes, the autonomous vehicle may determine an intersection of the centerline of the lane and the circle corresponding to the actor. Each of the intersections represent a candidate target point.

The autonomous vehicle may assign **906** a score to one or more of the candidate target points. For one or more of the candidate target points, the autonomous vehicle may use the following scoring function to assign **106** a score to one or more candidate target points.

$$loss = A_1 \delta\theta + A_2 \Theta \left[ \kappa - \kappa_{min} \right] + A_3 \kappa v^2$$

Where:

$\delta\theta$ is a cosine distance (heading discrepancy associated with the target point);

$\Theta$ is a binary value result of a curvature Heaviside function indicating whether a curvature of a particular reference path for a target point is feasible;

$v^2$ is the lateral acceleration of the actor;

$\kappa$ is the curvature of the circle (which equals 1 / radius);

$K_{min}$ is a minimum curvature that an autonomous vehicle can accommodate; and

A1, A2 and A3 are coefficients that may be used to weight various parameters.

An autonomous vehicle may determine a heading discrepancy at a target point. An autonomous vehicle may determine a heading discrepancy by determining a cosine distance at the target point. In various implementations, a coefficient may be applied to the heading discrepancy. The coefficient may be a result of applying a scaling factor to the heading. For example, in various embodiments, A1 may be used to tune the overall fit of an actor to a target point. A2 may be used to weight how important it is that the system think the actor can physically achieve a path to a target point. A3 may represent the weighting placed on an actor being able to drive the path of the curvature, given the actor's current velocity and acceleration.

The autonomous vehicle may determine whether the path for an actor to navigate to a target point is too tight for the object to navigate or traverse. This determination may be based on whether the path curvature is less than a threshold value. If it is, the system may determine that the actor may comfortably reach the target point. If the path curvature is not less than a threshold value, the system may determine that the actor may not reach the target point without a multi-point maneuver. In various implementations, a function may be used to assist with this determination. A function may take information pertaining to a particular target point as input and may output one value if a path to a target point may be comfortably traversed by an actor and a different value if the path may not be comfortably traversed by the actor. For instance, a binary function may be used. In another embodiment, a linear regression model may be trained using historical observed data.

The autonomous vehicle may determine a lateral acceleration of the actor. The lateral acceleration may be the product of the curvature and the velocity squared of the actor. In various implementations, the velocity may be obtained from object tracking.

The score may be determined by summing the heading discrepancy (with a coefficient applied, if applicable), the curvature parameter (with a coefficient applied, if applicable), and the lateral velocity of the actor (with a coefficient applied, if applicable).

In various embodiments, the autonomous vehicle may select **908** the candidate target point having the lowest score. The autonomous vehicle may generate **910** a curve or a spline from the location of the actor to the selected candidate target point as a reference path. The autonomous vehicle may generate **910** a reference path that is in the map frame (rather than the object frame). An example of such curve or spline may be a Bezier curve, a parametric curve that is related to the Bernstein polynomial. Given a set of $n + 1$ control points $P_0, P_1,..., P_n$, the corresponding Bezier curve is given by:

$$\mathbf{C}(t) = \sum_{i=0}^{n} \mathbf{P}_i \, B_{i,n}(t),$$

where $B_{i,n}(t)$ is a Bernstein polynomial and $t \in [0, 1]$.

However, it is understood that other types of curves or splines may be used.

In various embodiments, if the autonomous vehicle does not identify any reasonable target points, the autonomous vehicle may determine that the actor will continue to move forward and straight along its current path.

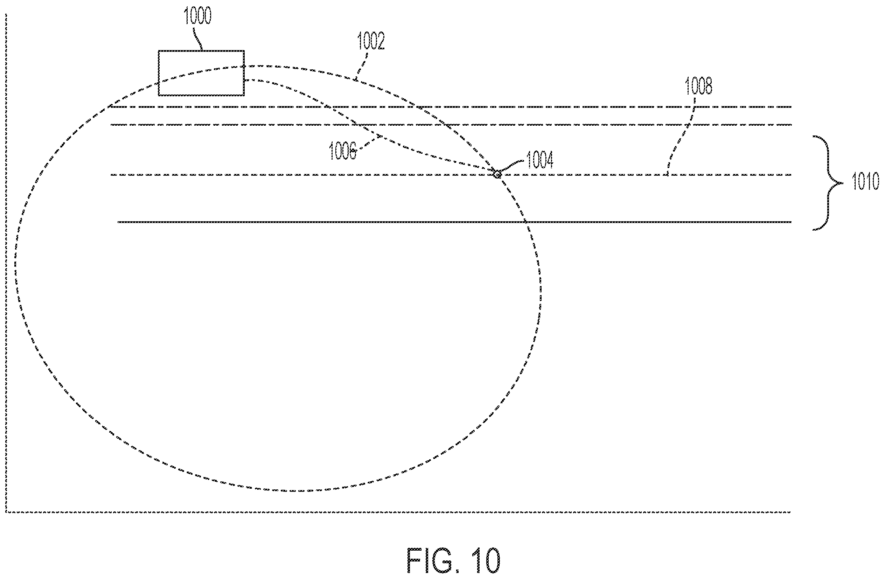

FIG. 10 illustrates an example diagram showing an example reference path between an actor and a target point. FIG. 10 shows an example actor **1000** and a circle **1002** corresponding to the actor. The circle **1002** intersects the centerline **1008** of the lane **1010** a target point 1004. For the purpose of this example, target point **1004** is assumed to have the lowest score. As such an autonomous vehicle may generate a curve **1006** between the actor and the target point **1004** that represents a reference path of the actor.

In various embodiments, an autonomous vehicle may elect not to predict the future behavior of an actor in the manner described above with respect to FIG. 9. Instead, an autonomous vehicle may apply one or more policies or constraints on an actor's behavior to determine whether route inference should be used.

For example, an actor may be pulling off of a road into a parking lane. When the actor pulls into the parking lane, it may no longer have lane-following predictions and as such, will be identified as an actor that is exhibiting unrecognized behavior. However, the autonomous vehicle may not want to give the actor route inference and predict that it will merge back into traffic. In this situation, the autonomous vehicle may adhere to a policy that provides that an actor that was recently (within a certain time period) lane-following and is no longer occupying a lane will likely maintain this behavior. The behavior of such actor may not be inferred, but rather the actor may remain with unrecognized predictions, meaning that the autonomous vehicle will expect that the actor will continue to move forward along its current path.

An on-board computing device may perform **912** one or more forecasting and prediction operations. At least a portion of the reference path may be used to predict the behavior or path of the associated actor. This prediction may be performed by applying an object kinematics model to a path following controller. These models and controllers may include, for example, a pure pursuit controller, a simple-bicycle model for non-holonomic control and pure-pursuit, a probabilistic learned policy (such as one instantiated as deep (recurrent) neural networks), and/or the like.

This prediction information (e.g., a predicted path of an actor) may be used by the on-board computing device to adjust **914** one or more driving operations of an autonomous vehicle. For example, the system may cause an autonomous vehicle to accelerate, decelerate, brake, change direction, adjust its trajectory, and/or perform one or more collision avoidance operations based on the predicted behavior of the actor.

As an example, referring back to FIG. 10, an on-board computing device may receive at least a portion of the prediction data, and may analyze it to execute or more vehicle control instructions. For instance, in response to analyzing the prediction data, an on-board computing device may execute one or more control instructions that cause the autonomous vehicle to decelerate or brake at an intersection in order to yield to the actor. For example, an on-board computing device may cause one or more brakes of the autonomous vehicle to be applied. Additional and/or alternate driving operations may be performed.

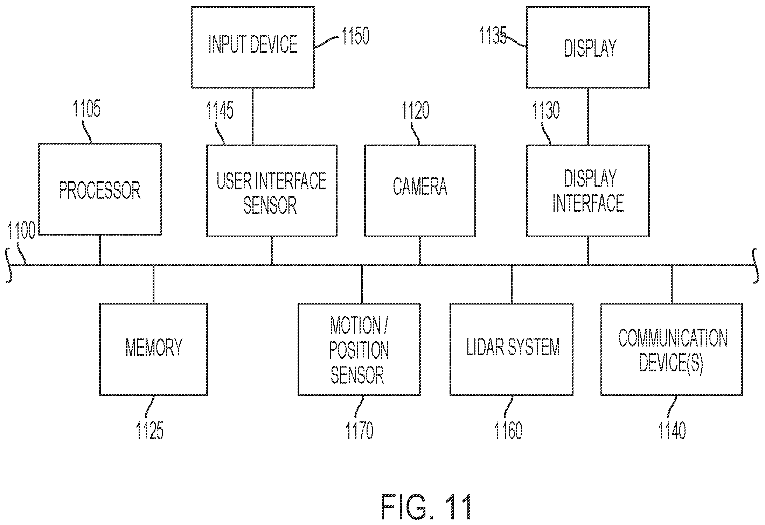

FIG. 11 depicts an example of internal hardware that may be included in any of the electronic components of the system, such as internal processing systems of the AV, external monitoring and reporting systems, or remote servers. An electrical bus **1100** serves as an information highway interconnecting the other illustrated components of the hardware. Processor **1105** is a central processing device of the system, configured to perform calculations and logic operations required to execute programming instructions. As used in this document and in the claims, the terms "processor" and "processing device" may refer to a single processor or any number of processors in a set of processors that collectively perform a set of operations, such as a central processing unit (CPU), a graphics processing unit (GPU), a remote server, or a combination of these. Read only memory (ROM), random access memory (RAM), flash memory, hard drives and other devices capable of storing electronic data constitute examples of memory devices **1125.** A memory device may include a single device or a collection of devices across which data and/or instructions are stored. Various embodiments may include a computer-readable medium containing programming instructions that are configured to cause one or more processors to perform the functions described in the context of the previous figures.

An optional display interface **1130** may permit information from the bus **1100** to be displayed on a display device **1135** in visual, graphic or alphanumeric format, such on an in-dashboard display system of the vehicle. An audio interface and audio output (such as a speaker) also may be provided. Communication with external devices may occur using various communication devices **1140** such as a wireless antenna, a radio frequency identification (RFID) tag and/or short-range or near-field communication transceiver, each of which may optionally communicatively connect with other components of the device via one or more communication system. The communication device(s) **1140** may be configured to be communicatively connected to a communications network, such as the Internet, a local area network or a cellular telephone data network.

The hardware may also include a user interface sensor **1145** that allows for receipt of data from input devices **1150** such as a keyboard or keypad, a joystick, a touchscreen, a touch pad, a remote control, a pointing device and/or microphone. Digital image frames also may be received from a camera **1120** that can capture video and/or still images. The system also may receive data from a motion and/or position sensor **1170** such as an accelerometer, gyroscope or inertial measurement unit. The system also may include and receive data via a LiDAR system **1160,** when used in the context of autonomous vehicles.

Terminology that is relevant to the disclosure provided above includes:

An "automated device" or "robotic device" refers to an electronic device that includes a processor, programming instructions, and one or more components that based on commands from the processor can perform at least some operations or tasks with minimal or no human intervention. For example, an automated device may perform one or more automatic functions or function sets. Examples of such operations, functions or tasks may include without, limitation, navigation, transportation, driving, delivering, loading, unloading, medical-related processes, construction-related processes, and/or the like. Example automated devices may include, without limitation, autonomous vehicles, drones and other autonomous robotic devices.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle. Autonomous vehicles also include vehicles in which autonomous systems augment human operation of the vehicle, such as vehicles with driver-assisted steering, speed control, braking, parking and other systems.

In this invention, the terms "street," "lane" and "intersection" are illustrated by way of example with vehicles traveling on one or more roads. However, the embodiments are intended to include lanes and intersections in other locations, such as parking areas. In addition, for autonomous vehicles that are designed to be used indoors (such as automated picking devices in warehouses), a street may be a corridor of the warehouse and a lane may be a portion of the corridor. If the autonomous vehicle is a drone or other aircraft, the term "street" may represent an airway and a lane may be a portion of the airway. If the autonomous vehicle is a watercraft, then the term "street" may represent a waterway and a lane may be a portion of the waterway.

The terms "intersection" means a location where two or more streets meet or cross each other.

As used in this invention, the term "light" means electromagnetic radiation associated with optical frequencies, e.g., ultraviolet, visible, infrared and terahertz radiation. Example emitters of light include laser emitters and other emitters that emit converged light. In this invention, the term "emitter" will be used to refer to an emitter of light, such as a laser emitter that emits infrared light.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

When used in the context of autonomous vehicle motion planning, the term "trajectory" refers to the plan that the vehicle's motion planning system will generate, and which the vehicle's motion control system will follow when controlling the vehicle's motion. A trajectory includes the vehicle's planned position and orientation at multiple points in time over a time horizon, as well as the vehicle's planned steering wheel angle and angle rate over the same time horizon. An autonomous vehicle's motion control system will consume the trajectory and send commands to the vehicle's steering controller, brake controller, throttle controller and/or other motion control subsystem to move the vehicle along a planned path.

A "trajectory" of an actor that a vehicle's perception or prediction systems may generate refers to the predicted path that the actor will follow over a time horizon, along with the predicted speed of the actor and/or position of the actor along the path at various points along the time horizon.

A "mapped lane segment" refers to a representation of a lane of a street that is defined by one or more boundaries such as, for example, lane boundary lines or other markers.

The terms "memory," "memory device," "computer-readable storage medium," "data store," "data storage facility" and the like each refer to a non-transitory device on which computer-readable data, programming instructions or both are stored. Except where specifically stated otherwise, the terms "memory," "memory device," "computer-readable storage medium," "data store," "data storage facility" and the like are intended to include single device embodiments, embodiments in which multiple memory devices together or collectively store a set of data or instructions, as well as individual sectors within such devices.

The term "object", when referring to an object that is detected by a vehicle perception system or simulated by a simulation system, is intended to encompass both stationary objects and moving (or potentially moving) actors, except where specifically stated otherwise by terms use of the term "actor" or "stationary object."

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

In this invention, the terms "communication link" and "communication path" mean a wired or wireless path via which a first device sends communication signals to and/or receives communication signals from one or more other devices. Devices are "communicatively connected" if the devices are able to send and/or receive data via a communication link. "Electronic communication" refers to the transmission of data via one or more signals between two or more electronic devices, whether through a wired or wireless network, and whether directly or indirectly via one or more intermediary devices.

In this invention, when relative terms of order such as "first" and "second" are used to modify a noun, such use is simply intended to distinguish one item from another, and is not intended to require a sequential order unless specifically stated.

In addition, terms of relative position such as "vertical" and "horizontal", or "front" and "rear", when used, are intended to be relative to each other and need not be absolute, and only refer to one possible position of the device associated with those terms depending on the device's orientation. When this invention uses the terms "front," "rear," and "sides" to refer to an area of a vehicle, they refer to areas of vehicle with respect to the vehicle's default area of travel. For example, a "front" of an automobile is an area that is closer to the vehicle's headlamps than it is to the vehicle's tail lights, while the "rear" of an automobile is an area that is closer to the vehicle's tail lights than it is to the vehicle's headlamps. In addition, the terms "front" and "rear" are not necessarily limited to forward-facing or rear-facing areas but also include side areas that are closer to the front than the rear, or vice versa, respectively. "Sides" of a vehicle are intended to refer to side-facing sections that are between the foremost and rearmost portions of the vehicle.

**Claims**

1. A method, comprising:

by one or more electronic devices of an autonomous vehicle (101, 201):

identifying an intersection,
identifying an object (400) in proximity to the intersection,
identifying (300) a plurality of outlets (506, 508, 510) of the intersection, wherein an outlet (506, 508, 510) refers to a trajectory that the moving object (400) may take to traverse the intersection,
for each outlet (506, 508, 510):

identifying (302) a polyline (604) associated with the outlet (506, 508, 510),

identifying (304) a target point (402, 602), said target point (402, 602) being a point located a certain distance from the outlet (506, 508, 510) along the polyline (604), and

determining (306) a constant curvature path (500, 502, 504) from the object (400) to the target point (402, 602),

determining (308) a score associated with each outlet (506, 508, 510) based at least in part on the constant curvature path (500, 502, 504) of the outlet (506, 508, 510),

generating a pruned set of outlets that includes one or more of the outlets (506, 508, 510) from the plurality of outlets (506, 508, 510) based on its score, and

for each outlet in the pruned set, generating (312) a reference path from the object (400) to the target point (402, 602) of the outlet (506, 508, 510),

**characterized in that**, determining (306) a constant curvature path (500, 502, 504) from the object (400) to the target point (402, 602) comprises fitting a circle (404 608) to the object (400) and the target point (402, 602) in an object frame by:

locating a center of rotation of the object (400) at an origin position;

applying a point constraint and a slope constraint on the circle (404, 608) such that the circle (404, 608) passes through the origin position; and

applying a second point constraint on the circle (404, 608) such that the circle (404, 608) passes through the target point (402, 602).

2. The method of claim 1, further comprising:

using one or more of the generated reference paths to predict a trajectory of the object (400) through the intersection; and

adjusting one or more driving operations of the autonomous vehicle (101, 201) based on the trajectory of the object (400) through the intersection that is predicted.

3. The method of claim 1 or 2, wherein identifying (304) a target point (402, 602) along the polyline (604) comprises identifying a target point (402, 602) located a certain distance from an end of the outlet (506, 508, 510).

4. The method of any of claims 1 to 3, wherein determining (308) a score associated with each outlet (506, 508, 510) based at least in part on the constant curvature path (500, 502, 504) of the outlet (506, 508, 510) comprises:

determining a heading discrepancy value;

determining a curvature parameter;

determining a lateral acceleration of the object (400); and

summing the heading discrepancy value, the curvature parameter, and the lateral acceleration.

5. The method of claim 4, wherein determining a heading discrepancy value comprises determining a cosine distance at the target point (402, 602) of the outlet (506, 508, 510).

6. The method of claim 4, wherein determining a curvature parameter comprises applying a function to a curvature of the constant curvature path (500, 502, 504).

7. The method of claim 6, wherein the result of the function is a first value if the curvature of the constant curvature path (500, 502, 504) is too tight to traverse the outlet (506, 508, 510), wherein the result is a second value if the curvature of the constant curvature path (500, 502, 504) is not too tight to traverse the outlet (506, 508, 510).

8. The method of claim 4, wherein determining a lateral acceleration of the object (400) comprises:

identifying a curvature of the constant curvature path (500, 502, 504) of the outlet (506, 508, 510);

determining a velocity of the object (400);

squaring the velocity of the object (400) to generate a squared value; and

determining a product of the curvature and the squared value.

**9.** A system (100), comprising:

one or more electronic devices of an autonomous vehicle (101, 201); and
a computer-readable storage medium comprising one or more programming instructions that, when executed, cause one or more of the electronic devices to:

identify an intersection,
identify an object (400) in proximity to the intersection,
identify (300) a plurality of outlets (506, 508, 510) of the intersection, wherein an outlet refers to a trajectory that the moving object may take to traverse the intersection,
for each outlet (506, 508, 510):

identify (302) a polyline (604) associated with the outlet (506, 508, 510),
identify (304) a target point (402, 602), said target point (402, 602) being a point located a certain distance from the outlet (506, 508, 510) along the polyline (604), and
determine (306) a constant curvature path (500, 502, 504) from the object (400) to the target point (402, 602),

determine (308) a score associated with each outlet (506, 508, 510) based at least in part on the constant curvature path (500, 502, 504) of the outlet (506, 508, 510),
generate a pruned set of outlets that includes one or more of the outlets (506, 508, 510) from the plurality of outlets (506, 508, 510) based on its score, and
for each outlet in the pruned set, generate (312) a reference path from the object (400) to the target point (402, 602) of the outlet (506, 508, 510),

**characterized in that**, determining (306) a constant curvature path (500, 502, 504) from the object (400) to the target point (402, 602) comprises fitting a circle (404, 608) to the object (400) and the target point (402, 602) in an object frame by:

locating a center of rotation of the object (400) at an origin position;
applying a point constraint and a slope constraint on the circle (404, 608) such that the circle (404, 608) passes through the origin position; and
applying a second point constraint on the circle (404, 608) such that the circle (404, 608) passes through the target point (402, 602).

**10.** The system (100) of claim 9, wherein the one or more programming instructions that, when executed, cause one or more of the electronic devices to determine a score associated with each outlet (506, 508, 510) based at least in part on the constant curvature path (500, 502, 504) of the outlet (506, 508, 510) comprise one or more programming instructions that, when executed, cause the one or more of the electronic devices to:

determine a heading discrepancy value;
determine a curvature parameter;
determine a lateral acceleration of the object (400); and
sum the heading discrepancy value, the curvature parameter, and the lateral acceleration.

**11.** The system (100) of claim 9 or 10, wherein the one or more programming instructions that, when executed, cause one or more of the electronic devices to determine a heading discrepancy value comprise one or more programming instructions that, when executed, cause the one or more of the electronic devices to determine a cosine distance at the target point (402, 602) of the outlet (506, 508, 510).

**12.** The system (100) of claim 9 or 10, wherein the one or more programming instructions that, when executed, cause one or more of the electronic devices to determine a curvature parameter comprise one or more programming instructions that, when executed, cause the one or more of the electronic devices to apply a function to a curvature of the constant curvature path (500, 502, 504).

**13.** The system (100) of claim 9 or 10, wherein the one or more programming instructions that, when executed, cause one or more of the electronic devices to determine a lateral acceleration of the object (400) comprise one or more programming instructions that, when executed, cause the one or more of the electronic devices to:

identify a curvature of the constant curvature path (500, 502, 504) of the outlet (506, 508, 510);

determine a velocity of the object (400);

square the velocity of the object (400) to generate a squared value; and

determine a product of the curvature and the squared value.

14. A computer program product comprising a memory that stores programming instructions that are configured to cause a processor to:

identify an intersection;

identify an object (400) in proximity to the intersection;

identify (300) a plurality of outlets (506, 508, 510) of the intersection; wherein an outlet (506, 508, 510) refers to the trajectory that the moving object (400) may take to traverse the intersection,

for each outlet (506, 508, 510):

identify (302) a polyline (604) associated with the outlet (506, 508, 510),

identify (304) a target point (402, 602), said target point (402, 602) being a point located a certain distance from the outlet (506, 508, 510) along the polyline (604), and

determine (306) a constant curvature path (500, 502, 504) from the object (400) to the target point (402, 602);

determine (308) a score associated with each outlet (506, 508, 510) based at least in part on the constant curvature path (500, 502, 504) of the outlet (506, 508, 510);

generate a pruned set of outlets that includes one or more of the outlets (506, 508, 510) from the plurality of outlets (506, 508, 510) based on its score; and

for each outlet in the pruned set, generate (312) a reference path from the object (400) to the target point (402, 602) of the outlet (506, 508, 510),

**characterized in that**, determining (306) a constant curvature path (500, 502, 504) from the object (400) to the target point (402, 602) comprises fitting a circle (404, 608) to the object (400) and the target point (402, 602) in an object frame by:

locating a center of rotation of the object (400) at an origin position;

applying a point constraint and a slope constraint on the circle (404, 608) such that the circle (404, 608) passes through the origin position; and

applying a second point constraint on the circle (404, 608) such that the circle (404, 608) passes through the target point (402, 602).

**Patentansprüche**

1. Verfahren, umfassend:

durch eine oder mehrere elektronische Vorrichtungen eines autonomen Fahrzeugs (101, 201):

Identifizieren einer Kreuzung,

Identifizieren eines Objekts (400) in der Nähe der Kreuzung,

Identifizieren (300) einer Mehrzahl von Auslässen (506, 508, 510) der Kreuzung, wobei sich ein Auslass (506, 508, 510) auf eine Bewegungsbahn bezieht, die das sich bewegende Objekt (400) nehmen kann, um die Kreuzung zu durchqueren,

für jeden Auslass (506, 508, 510):

Identifizieren (302) einer Polylinie (604), die dem Auslass (506, 508, 510) zugeordnet ist,

Identifizieren (304) eines Zielpunktes (402, 602), wobei der Zielpunkt (402, 602) ein Punkt ist, der sich in einem bestimmten Abstand von dem Auslass (506, 508, 510) entlang der Polylinie (604) befindet, und

Bestimmen (306) eines konstanten Krümmungspfades (500, 502, 504) von dem Objekt (400) zu dem Zielpunkt (402, 602),

Bestimmen (308) einer jedem Auslass (506, 508, 510) zugeordneten Bewertung, zumindest teilweise basierend auf dem konstanten Krümmungspfad (500, 502, 504) des Auslasses (506, 508, 510),

Erzeugen eines bereinigten Satzes von Auslässen, der einen oder mehrere der Auslässe (506, 508, 510) aus der Mehrzahl von Auslässen (506, 508, 510) enthält, basierend auf seiner Bewertung, und Erzeugen (312), für jeden Auslass in dem bereinigten Satz, eines Referenzpfades von dem Objekt (400) zu dem Zielpunkt (402, 602) des Auslasses (506, 508, 510),

**dadurch gekennzeichnet, dass** das Bestimmen (306) eines konstanten Krümmungspfades (500, 502, 504) von dem Objekt (400) zu dem Zielpunkt (402, 602) das Anpassen eines Kreises (404, 608) an das Objekt (400) und den Zielpunkt (402, 602) in einem Objektrahmen umfasst, durch:

Lokalisieren eines Drehpunkts des Objekts (400) an einer Ursprungsposition;
Anwenden einer Punktbeschränkung und einer Neigungsbeschränkung auf den Kreis (404, 608) derart, dass der Kreis (404, 608) durch die Ursprungsposition verläuft; und Anwenden einer zweiten Punktbeschränkung auf den Kreis (404, 608) derart, dass der Kreis (404, 608) durch den Zielpunkt (402, 602) verläuft.

2. Verfahren nach Anspruch 1, ferner umfassend:

Verwenden eines oder mehrerer der erzeugten Referenzpfade, um eine Bewegungsbahn des Objekts (400) durch die Kreuzung vorherzusagen; und
Anpassen eines oder mehrerer Fahrvorgänge des autonomen Fahrzeugs (101, 201) basierend auf der vorhergesagten Bewegungsbahn des Objekts (400) durch die Kreuzung.

3. Verfahren nach Anspruch 1 oder 2, wobei das Identifizieren (304) eines Zielpunktes (402, 602) entlang der Polylinie (604) das Identifizieren eines Zielpunktes (402, 602) umfasst, der sich in einem bestimmten Abstand von einem Ende des Auslasses (506, 508, 510) befindet.

4. Verfahren nach einem der Ansprüche 1 bis 3, wobei das Bestimmen (308) einer jedem Auslass (506, 508, 510) zugeordneten Bewertung zumindest teilweise basierend auf dem konstanten Krümmungspfad (500, 502, 504) des Auslasses (506, 508, 510) umfasst:

Bestimmen eines Kursabweichungswertes;
Bestimmen eines Krümmungsparameters;
Bestimmen einer Querbeschleunigung des Objekts (400); und
Summieren des Kursabweichungswertes, des Krümmungsparameters und der Querbeschleunigung.

5. Verfahren nach Anspruch 4, wobei das Bestimmen eines Kursabweichungswertes das Bestimmen eines Kosinus-Abstandes am Zielpunkt (402, 602) des Auslasses (506, 508, 510) umfasst.

6. Verfahren nach Anspruch 4, wobei die Bestimmung eines Krümmungsparameters das Anwenden einer Funktion auf eine Krümmung des konstanten Krümmungspfades (500, 502, 504) umfasst.

7. Verfahren nach Anspruch 6, wobei das Ergebnis der Funktion ein erster Wert ist, wenn die Krümmung des konstanten Krümmungspfads (500, 502, 504) zu eng ist, um den Auslass (506, 508, 510) zu durchqueren, wobei das Ergebnis ein zweiter Wert ist, wenn die Krümmung des konstanten Krümmungspfads (500, 502, 504) nicht zu eng ist, um den Auslass (506, 508, 510) zu durchqueren.

8. Verfahren nach Anspruch 4, wobei das Bestimmen einer Querbeschleunigung des Objekts (400) umfasst:

Identifizieren einer Krümmung des konstanten Krümmungspfades (500, 502, 504) des Auslasses (506, 508, 510);
Bestimmen einer Geschwindigkeit des Objekts (400);
Quadrieren der Geschwindigkeit des Objekts (400), um einen quadrierten Wert zu erzeugen; und
Bestimmen eines Produkts aus der Krümmung und dem quadrierten Wert.

9. System (100), umfassend:

eine oder mehrere elektronische Vorrichtungen eines autonomen Fahrzeugs (101, 201); und
ein computerlesbares Speichermedium, das eine oder mehrere Programmieranweisungen umfasst, die bewirken, wenn sie ausgeführt werden, dass eine oder mehrere der elektronischen Vorrichtungen:

eine Kreuzung identifizieren,

ein Objekt (400) in der Nähe der Kreuzung identifizieren,

eine Mehrzahl von Auslässen (506, 508, 510) der Kreuzung identifizieren (300), wobei sich ein Auslass auf eine Bewegungsbahn bezieht, die das sich bewegende Objekt nehmen kann, um die Kreuzung zu durchqueren,

für jeden Auslass (506, 508, 510):

eine Polylinie (604) identifizieren (302), die dem Auslass (506, 508, 510) zugeordnet ist,

einen Zielpunkt (402, 602) identifizieren (304), wobei der Zielpunkt (402, 602) ein Punkt ist, der sich in einem bestimmten Abstand von dem Auslass (506, 508, 510) entlang der Polylinie (604) befindet, und einen konstanten Krümmungspfades (500, 502, 504) von dem Objekt (400) zu dem Zielpunkt (402, 602) bestimmen (306),

eine jedem Auslass (506, 508, 510) zugeordnete Bewertung bestimmen (308), zumindest teilweise basierend auf dem konstanten Krümmungspfad (500, 502, 504) des Auslasses (506, 508, 510), einen bereinigten Satz von Auslässen erzeugen, der einen oder mehrere der Auslässe (506, 508, 510) aus der Mehrzahl von Auslässen (506, 508, 510) enthält, basierend auf seiner Bewertung, und für jeden Auslass in dem bereinigten Satz einen Referenzpfad von dem Objekt (400) zu dem Zielpunkt (402, 602) des Auslasses (506, 508, 510) erzeugen (312),

**dadurch gekennzeichnet, dass** das Bestimmen (306) eines konstanten Krümmungspfades (500, 502, 504) von dem Objekt (400) zu dem Zielpunkt (402, 602) das Anpassen eines Kreises (404, 608) an das Objekt (400) und den Zielpunkt (402, 602) in einem Objektrahmen umfasst, durch:

Lokalisieren eines Drehpunkts des Objekts (400) an einer Ursprungsposition;

Anwenden einer Punktbeschränkung und einer Neigungsbeschränkung auf den Kreis (404, 608) derart, dass der Kreis (404, 608) durch die Ursprungsposition verläuft; und Anwenden einer zweiten Punktbeschränkung auf den Kreis (404, 608) derart, dass der Kreis (404, 608) durch den Zielpunkt (402, 602) verläuft.

10. System (100) nach Anspruch 9, wobei die eine oder mehreren Programmieranweisungen, die bewirken, wenn sie ausgeführt werden, dass eine oder mehrere der elektronischen Vorrichtungen eine jedem Auslass (506, 508, 510) zugeordnete Bewertung bestimmen, die zumindest teilweise auf dem konstanten Krümmungspfad (500, 502, 504) des Auslasses (506, 508, 510) basiert, eine oder mehrere Programmieranweisungen umfassen, die bewirken, wenn sie ausgeführt werden, dass die eine oder die mehreren elektronischen Vorrichtungen:

einen Kursabweichungswert bestimmen;
einen Krümmungsparameter bestimmen;
eine Querbeschleunigung des Objekts (400) bestimmen; und
den Kursabweichungswert, den Krümmungsparameter und die Querbeschleunigung summieren.

11. System (100) nach Anspruch 9 oder 10, wobei die eine oder die mehreren Programmieranweisungen, die bewirken, wenn sie ausgeführt werden, dass eine oder mehrere der elektronischen Vorrichtungen einen Kursabweichungswert bestimmen, eine oder mehrere Programmieranweisungen umfassen, die bewirken, wenn sie ausgeführt werden, dass die eine oder die mehreren elektronischen Vorrichtungen einen Kosinus-Abstand am Zielpunkt (402, 602) des Auslasses (506, 508, 510) bestimmen.

12. System (100) nach Anspruch 9 oder 10, wobei die eine oder die mehreren Programmieranweisungen, die bewirken, wenn sie ausgeführt werden, dass eine oder mehrere der elektronischen Vorrichtungen einen Krümmungsparameter bestimmen, eine oder mehrere Programmieranweisungen umfassen, die bewirken, wenn sie ausgeführt werden, dass die eine oder die mehreren der elektronischen Vorrichtungen eine Funktion auf eine Krümmung des konstanten Krümmungspfads (500, 502, 504) anwenden.

13. System (100) nach Anspruch 9 oder 10, wobei die eine oder die mehreren Programmieranweisungen, die bewirken, wenn sie ausgeführt werden, dass eine oder mehrere der elektronischen Vorrichtungen eine Querbeschleunigung des Objekts (400) bestimmen, eine oder mehrere Programmieranweisungen umfassen, die bewirken, wenn sie ausgeführt werden, dass die eine oder die mehreren der elektronischen Vorrichtungen:

eine Krümmung des konstanten Krümmungspfades (500, 502, 504) des Auslasses (506, 508, 510) identifizieren;
eine Geschwindigkeit des Objekts (400) bestimmen;

die Geschwindigkeit des Objekts (400) quadrieren, um einen quadrierten Wert zu erzeugen; und

ein Produkt aus der Krümmung und dem quadrierten Wert bestimmen.

14. Computerprogrammprodukt, umfassend einen Speicher, der Programmieranweisungen speichert, die dazu konfiguriert sind, zu bewirken, dass ein Prozessor:

eine Kreuzung identifiziert;

ein Objekt (400) in der Nähe der Kreuzung identifiziert;

eine Mehrzahl von Auslässen (506, 508, 510) der Kreuzung identifiziert (300); wobei sich ein Auslass (506, 508, 510) auf die Bewegungsbahn bezieht, die das sich bewegende Objekt (400) nehmen kann, um die Kreuzung zu durchqueren,

für jeden Auslass (506, 508, 510):

eine Polylinie (604) identifiziert (302), die dem Auslass (506, 508, 510) zugeordnet ist, einen Zielpunkt (402, 602) identifiziert (304), wobei der Zielpunkt (402, 602) ein Punkt ist, der sich in einem bestimmten Abstand von dem Auslass (506, 508, 510) entlang der Polylinie (604) befindet, und

einen konstanten Krümmungspfades (500, 502, 504) von dem Objekt (400) zu dem Zielpunkt (402, 602) bestimmt (306);

eine jedem Auslass (506, 508, 510) zugeordnete Bewertung bestimmt (308), zumindest teilweise basierend auf dem konstanten Krümmungspfad (500, 502, 504) des Auslasses (506, 508, 510);

einen bereinigten Satz von Auslässen erzeugt, der einen oder mehrere der Auslässe (506, 508, 510) aus der Mehrzahl von Auslässen (506, 508, 510) enthält, basierend auf seiner Bewertung; und

für jeden Auslass in dem bereinigten Satz einen Referenzpfad von dem Objekt (400) zu dem Zielpunkt (402, 602) des Auslasses (506, 508, 510) erzeugt (312),

**dadurch gekennzeichnet, dass** das Bestimmen (306) eines konstanten Krümmungspfades (500, 502, 504) von dem Objekt (400) zu dem Zielpunkt (402, 602) das Anpassen eines Kreises (404, 608) an das Objekt (400) und den Zielpunkt (402, 602) in einem Objektrahmen umfasst, durch:

Lokalisieren eines Drehpunkts des Objekts (400) an einer Ursprungsposition;

Anwenden einer Punktbeschränkung und einer Neigungsbeschränkung auf den Kreis (404, 608) derart, dass der Kreis (404, 608) durch die Ursprungsposition verläuft; und

Anwenden einer zweiten Punktbeschränkung auf den Kreis (404, 608) derart, dass der Kreis (404, 608) durch den Zielpunkt (402, 602) verläuft.

## Revendications

1. Procédé, mis en œuvre par un ou plusieurs dispositifs électroniques d'un véhicule autonome (101, 201), comprenant :

l'identification d'un carrefour,

l'identification d'un objet (400) à proximité du carrefour,

l'identification (300) d'une pluralité de sorties (506, 508, 510) du carrefour, une sortie (506, 508, 510) désignant une trajectoire que l'objet en mouvement (400) peut prendre pour traverser le carrefour, et pour chaque sortie (506, 508, 510) :

l'identification (302) d'une polyligne (604) associée à la sortie (506, 508,510),

l'identification (304) d'un point cible (402, 602), ledit point cible (402, 602) étant un point situé à une certaine distance de la sortie (506, 508, 510) le long de la polyligne (604), et

la détermination (306) d'un chemin à courbure constante (500, 502, 504) entre l'objet (400) et le point cible (402, 602),

la détermination (308) d'un score associé à chaque sortie (506, 508, 510) sur la base, au moins en partie, du chemin à courbure constante (500, 502, 504) de la sortie (506, 508, 510),

la génération d'un ensemble élagué de sorties comprenant une ou plusieurs sorties (506, 508, 510) parmi la pluralité de sorties (506, 508, 510) en fonction de leur score, et pour chaque sortie de l'ensemble élagué, la génération (312) d'un chemin de référence entre l'objet (400) et le point cible (402, 602) de la sortie (506, 508, 510),

**caractérisé en ce que** la détermination (306) d'un chemin à courbure constante (500, 502, 504) entre l'objet (400) et le point cible (402, 602) consiste à ajuster un cercle (404608) passant par l'objet (400) et le point cible (402, 602) dans un repère de l'objet par :

la localisation d'un centre de rotation de l'objet (400) à une position d'origine ;

l'application d'une contrainte de point et d'une contrainte de pente au cercle (404, 608) de sorte que le cercle (404, 608) passe par la position d'origine ; et

l'application d'une deuxième contrainte de point au cercle (404, 608) de sorte que le cercle (404, 608) passe par le point cible (402, 602).

2. Procédé selon la revendication 1, comprenant en outre :

l'utilisation d'un ou de plusieurs chemins de référence générés pour prédire une trajectoire de l'objet (400) à travers le carrefour ; et

l'ajustement d'une ou de plusieurs opérations de conduite du véhicule autonome (101, 201) en fonction de la trajectoire prédite de l'objet (400) à travers le carrefour.

3. Procédé selon la revendication 1 ou 2, **caractérisé en ce que** l'identification (304) d'un point cible (402, 602) le long de la polyligne (604) comprend l'identification d'un point cible (402, 602) situé à une certaine distance d'une extrémité de la sortie (506, 508, 510).

4. Procédé selon l'une quelconque des revendications 1 à 3, **caractérisé en ce que** la détermination (308) d'un score associé à chaque sortie (506, 508, 510) sur la base, au moins en partie, du chemin à courbure constante (500, 502, 504) de la sortie (506, 508, 510) consiste à :

déterminer une valeur d'écart de cap ;

déterminer un paramètre de courbure ;

déterminer une accélération latérale de l'objet (400) ; et

additionner la valeur de l'écart de cap, le paramètre de courbure et l'accélération latérale.

5. Procédé selon la revendication 4, **caractérisé en ce que** la détermination d'une valeur d'écart de cap comprend la détermination d'une distance cosinus au niveau du point cible (402, 602) de la sortie (506, 508, 510).

6. Procédé selon la revendication 4, **caractérisé en ce que** la détermination d'un paramètre de courbure comprend l'application d'une fonction à une courbure du chemin à courbure constante (500, 502, 504).

7. Procédé selon la revendication 6, **caractérisé en ce que** le résultat de la fonction est une première valeur si la courbure du chemin à courbure constante (500, 502, 504) est trop serrée pour permettre le passage par la sortie (506, 508, 510), et **en ce que** le résultat est une seconde valeur si la courbure du chemin à courbure constante (500, 502, 15 504) n'est pas trop serrée pour permettre le passage par la sortie (506, 508, 510).

8. Procédé selon la revendication 4, **caractérisé en ce que** la détermination d'une accélération latérale de l'objectif (400) comprend :

l'identification d'une courbure du chemin à courbure constante (500, 502, 504) de la sortie (506, 508, 510) ;

la détermination d'une vitesse de l'objet (400) ;

la mise au carré de la vitesse de l'objet (400) pour obtenir une valeur au carré ; et

la détermination d'un produit de la courbure et de la valeur au carré.

9. Système (100), comprenant :

un ou plusieurs dispositifs électroniques d'un véhicule autonome (101, 201) ; et

un support de stockage lisible par ordinateur comprenant une ou plusieurs instructions de programmation qui, lorsqu'elles sont exécutées, conduisent un ou plusieurs des dispositifs électroniques à :

identifier un carrefour,

identifier un objet (400) à proximité du carrefour,

identifier (300) une pluralité de sorties (506, 508, 510) du carrefour, une sortie désignant une trajectoire que l'objet en mouvement peut prendre pour traverser le carrefour, et pour chaque sortie (506, 508, 510) :

identifier (302) une polyligne (604) associée à la sortie (506, 508, 510),
identifier (304) un point cible (402, 602), ledit point cible (402, 602) étant un point situé à une certaine distance de la sortie (506, 508, 510) le long de la polyligne (604), et
déterminer (306) un chemin à courbure constante (500, 502, 504) entre l'objet (400) et le point cible (402, 602),

déterminer (308) un score associé à chaque sortie (506, 508, 510) sur la base, au moins en partie, du chemin à courbure constante (500, 502, 504) de la sortie (506, 508, 510),
générer un ensemble élagué de sorties comprenant une ou plusieurs des sorties (506, 508, 510) parmi la pluralité de sorties (506, 508, 510) en fonction de leur score, et pour chaque sortie de l'ensemble élagué, générer (312) un chemin de référence entre l'objet (400) et le point cible (402, 602) de la sortie (506, 508, 510),

**caractérisé en ce que** la détermination (306) d'un chemin à courbure constante (500, 502, 504) entre l'objet (400) et le point cible (402, 602) consiste à ajuster un cercle (404, 608) passant par l'objet (400) et le point cible (402, 602) dans un repère de l'objet par :

la localisation d'un centre de rotation de l'objet (400) à une position d'origine ;
l'application d'une contrainte de point et d'une contrainte de pente au cercle (404, 608) de sorte que le cercle (404, 608) passe par la position d'origine ; et
l'application d'une deuxième contrainte de point au cercle (404, 608) de sorte que le cercle (404, 608) passe par le point cible (402, 602).

10. Système (100) selon la revendication 9, **caractérisé en ce que** la ou les instructions de programmation qui, lorsqu'elles sont exécutées, conduisent un ou plusieurs des dispositifs électroniques à déterminer un score associé à chaque sortie (506, 508, 510) sur la base, au moins en partie, du chemin à courbure constante (500, 502, 504) de la sortie (506, 508, 510), comprennent une ou plusieurs instructions de programmation qui, lorsqu'elles sont exécutées, conduisent un ou plusieurs des appareils électroniques à :

déterminer une valeur d'écart de cap ;
déterminer un paramètre de courbure ;
déterminer une accélération latérale de l'objet (400) ; et
additionner la valeur de l'écart de cap, le paramètre de courbure et l'accélération latérale.

11. Système (100) selon la revendication 9 ou 10, **caractérisé en ce que** la ou les instructions de programmation qui, lorsqu'elles sont exécutées, conduisent un ou plusieurs des dispositifs électroniques à déterminer une valeur d'écart de cap, comprennent une ou plusieurs instructions de programmation qui, lorsqu'elles sont exécutées, conduisent le ou les dispositifs électroniques à déterminer une distance cosinus au niveau du point cible (402, 602) de la sortie (506, 508, 510).

12. Système (100) selon la revendication 9 ou 10, **caractérisé en ce que** la ou les instructions de programmation qui, lorsqu'elles sont exécutées, conduisent un ou plusieurs des dispositifs électroniques à déterminer un paramètre de courbure, comprennent une ou plusieurs instructions de programmation qui, lorsqu'elles sont exécutées, conduisent le ou les dispositifs électroniques à appliquer une fonction à une courbure du chemin à courbure constante (500, 502, 504).

13. Système (100) selon la revendication 9 ou 10, **caractérisé en ce que** la ou les instructions de programmation qui, lorsqu'elles sont exécutées, conduisent un ou plusieurs des dispositifs électroniques à déterminer une accélération latérale de l'objet (400), comprennent une ou plusieurs instructions de programmation qui, lorsqu'elles sont exécutées, conduisent le ou les dispositifs électroniques à :

identifier une courbure du chemin à courbure constante (500, 502, 504) de la sortie (506, 508, 510) ;
déterminer une vitesse de l'objet (400) ;
mettre au carré la vitesse de l'objet (400) pour obtenir une valeur au carré ; et
déterminer un produit de la courbure et de la valeur au carré.

**14.** Produit de programme informatique comprenant une mémoire stockant des instructions de programmation configurées pour conduire un processeur à :

identifier une carrefour ;
identifier un objet (400) à proximité du carrefour ;
identifier (300) une pluralité de sorties (506, 508, 510) du carrefour, une sortie (506, 508, 510) désignant la trajectoire que l'objet en mouvement (400) peut prendre pour traverser le carrefour, et pour chaque sortie (506, 508, 510) :

identifier (302) une polyligne (604) associée à la sortie (506, 508, 510),
identifier (304) un point cible (402, 602), ledit point cible (402, 602) étant un point situé à une certaine distance de la sortie (506, 508, 510) le long de la polyligne (604), et
déterminer (306) un chemin à courbure constante (500, 502, 504) entre l'objet (400) et le point cible (402, 602) ;

déterminer (308) un score associé à chaque sortie (506, 508, 510) sur la base, au moins en partie, du chemin à courbure constante (500, 502, 504) de la sortie (506, 508, 510) ;
générer un ensemble élagué de sorties comprenant une ou plusieurs sorties (506, 508, 510) parmi la pluralité de sorties (506, 508, 510) en fonction de leur score, et pour chaque sortie de l'ensemble élagué, générer (312) un chemin de référence entre l'objet (400) et le point cible (402, 602) de la sortie (506, 508, 510),

**caractérisé en ce que** la détermination (306) d'un chemin à courbure constante (500, 502, 504) entre l'objet (400) et le point cible (402, 602) consiste à ajuster un cercle (404, 608) passant par l'objet (400) et le point cible (402, 602) dans un repère de l'objet par :

la localisation d'un centre de rotation de l'objet (400) à une position d'origine ;
l'application d'une contrainte de point et d'une contrainte de pente au cercle (404, 608) de sorte que le cercle (404, 608) passe par la position d'origine ; et
l'application d'une deuxième contrainte de point au cercle (404, 608) de sorte que le cercle (404, 608) passe par le point cible (402, 602).

FIG. 1

POSITION SENSOR 236
SPEED SENSOR 238
ODOMETER SENSOR 240
CLOCK 242
LOCATION / GPS 260
CAMERA(S) 262
LIDAR 264
RADAR / SONAR 266

ENVIRONMENTAL SENSOR(S) 268

ENGINE / MOTOR 202

ON-BOARD COMPUTING DEVICE 212

BRAKE CONTROLLER 222
STEERING CONTROLLER 224
THROTTLE CONTROLLER 226
SPEED CONTROLLER 228
GEAR CONTROLLER 230
ROUTING CONTROLLER 231

AUXILIARY DEVICE CONTROLLER 254

201

FIG. 2

Identify outlets — 300

Identify polyline — 302

Identify target point — 304

Determine CCP — 306

Determine score — 308

Select outlets — 310

Generate reference path — 312

Provide to forecast system — 314

Predict object behavior — 316

Adjust driving operations — 318

FIG. 3

FIG. 4A

$$y_c = y_0 + \delta \quad \Rightarrow \quad \delta = y_c - y_0$$

$$\delta^2 + x_0{}^2 = y_c{}^2$$

---

$$(y_c - y_0)^2 + x_0{}^2 = y_c{}^2$$

$$\cancel{y_c{}^2} - 2y_c y_0 + y_0{}^2 + x_0{}^2 = \cancel{y_c{}^2}$$

$$y_c = \frac{x_0{}^2 + y_0{}^2}{2y_0}$$

distance b/w points

## FIG. 4B

FIG. 5

FIG. 6

Determine heading discrepancy ⟋700

Determine whether a path is too tight ⟋702

Determine lateral acceleration ⟋704

FIG. 7

```
┌─────────────────────────────┐
│   Identify reference path    │──800
└─────────────────────────────┘
              │
              ▼
┌─────────────────────────────┐
│       Identify outlet        │──802
└─────────────────────────────┘
              │
              ▼
┌─────────────────────────────┐
│  Identify mapped lane segments │──804
└─────────────────────────────┘
              │
              ▼
          Does
     lane segment        ──806
   match reference
          path?
```

| One lane segment matches | Multiple lane segments match with same metadata | No lane segments match or multiple lane segments match but have conflicting metadata |

| Apply metadata ──808 | Apply metadata ──810 | Apply default metadata ──812 |

FIG. 8

```
┌─────────────────────────────────┐
│         Identify actor          │──900
└─────────────────────────────────┘
                │
                ▼
┌─────────────────────────────────┐
│         Generate circle         │──902
└─────────────────────────────────┘
                │
                ▼
┌─────────────────────────────────┐
│   Determine candidate target points │──904
└─────────────────────────────────┘
                │
                ▼
┌─────────────────────────────────┐
│    Assign scores to target points   │──906
└─────────────────────────────────┘
                │
                ▼
┌─────────────────────────────────┐
│ Select candidate target point with lowest score │──908
└─────────────────────────────────┘
                │
                ▼
┌─────────────────────────────────┐
│         Generate spline         │──910
└─────────────────────────────────┘
                │
                ▼
┌─────────────────────────────────┐
│ Perform forecasting and prediction operations │──912
└─────────────────────────────────┘
                │
                ▼
┌─────────────────────────────────┐
│ Adjust driving operations of autonomous vehicle │──914
└─────────────────────────────────┘
```

FIG. 9

FIG. 10

EP 4 222 035 B1

FIG. 11

**REFERENCES CITED IN THE DESCRIPTION**

**Patent documents cited in the description**

- US 2018099663 A1

- US 2016161271 A1